(19) **Europäisches Patentamt / European Patent Office / Office européen des brevets**

(11) **EP 2 090 395 B1**

(12) **EUROPÄISCHE PATENTSCHRIFT**

(45) Veröffentlichungstag und Bekanntmachung des Hinweises auf die Patenterteilung:
**28.09.2016 Patentblatt 2016/39**

(51) Int Cl.:
**B23K 20/04** *(2006.01)*     **B23K 26/24** *(2014.01)*
**B23K 13/01** *(2006.01)*     **B32B 15/01** *(2006.01)*

(21) Anmeldenummer: **09002003.3**

(22) Anmeldetag: **13.02.2009**

(54) **Verfahren und Vorrichtung zum Herstellen von metallischen Werkstoffverbunden und Verbund-Halbzeugen**

Device and method for manufacturing metallic material compounds and compound semi-finished products

Procédé et dispositif de fabrication de composites de matière active métalliques et produits semi-finis composites

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **13.02.2008 DE 102008008833**
**05.08.2008 DE 102008036435**

(43) Veröffentlichungstag der Anmeldung:
**19.08.2009 Patentblatt 2009/34**

(73) Patentinhaber:
• **Fraunhofer-Gesellschaft zur Förderung der angewandten Forschung e.V.**
**80686 München (DE)**
• **MEC Lasertec AG**
**5733 Leimbach (CH)**

(72) Erfinder:
• **Brenner, Berndt**
**01328 Dresden (DE)**
• **Fux, Volker**
**01796 Pirna (DE)**
• **Merz, Karl**
**5734 Reinach (CH)**

(56) Entgegenhaltungen:
**EP-A1- 0 739 678     EP-A1- 1 127 651**
**EP-A1- 1 285 719     DE-C1- 19 502 140**
**US-A- 4 803 334**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung bezieht sich auf ein Verfahren gemäß dem Oberbegriff des Anspruchs 1 und eine Vorrichtung gemäß dem Oberbegriff des Anspruchs 23 zur effektiven Herstellung von metallischen Werkstoffverbunden und Verbund-Halbzeugen. Werkstoffverbunde für die ihre Anwendung möglich und zweckmäßig ist, sind alle schwer oder nicht schmelzschweißbaren bzw. nicht oder nicht effektiv über Walz- oder Sprengplattieren fügbare Kombinationen metallischer Werkstoffe und Legierungen, wie z. B. Vergütungsstahl / Baustahl; Schnellarbeitsstahl / Baustahl; Stellite / Baustahl; verschleißbeständige martensitische Stähle / austenitische rostfreie Stähle; Stahl / Titan; Stahl / Aluminium; Stahl / Kupfer; Stahl / Messing; Stahl / Lagermetall; Titan / Aluminium; Titan / Nickel; Aluminium / Magnesium; Aluminium / Nickel usw. Besonders vorteilhaft ist ihre Anwendung für alle solche Werkstoffkombinationen, bei denen die Gefahr der Rissbildung durch martensitische Aufhärtung, der Entstehung von Heißrissen im Schweißgut oder der Versprödung infolge der Bildung eines intermetallischen Phasensaumes an der Fügegrenzfläche besteht, wie z. B. bei den Werkstoffkombinationen Wälzlagerstahl / Baustahl; Vergütungsstahl / Baustahl; Stahl / Titan; Titan / Aluminium. Halbzeuge, für die diese Erfindung nutzbar ist, sind z. B. Profile, Stangen, Bleche oder Bauteiloberflächen, deren eine Oberflächenpartie einer intensiven Verschleiß- oder korrosiven Beanspruchung ausgesetzt ist und die sich an den anderen Flächen problemlos spanend oder schweißtechnisch weiterverarbeiten lassen. Insbesondere die günstige schweißtechnische Weiterverarbeitbarkeit von Halbzeugen mit hochverschleißfesten Oberflächenbereichen eröffnet neue konstruktive Freiräume für die Auslegung einer Vielzahl von Verschleiß oder korrosiv belasteten Bauteilen. Bauteile, die aus diesen Halbzeugen günstig und mit verbesserten Eigenschaften fertigbar sind, sind z. B. Nocken für Nockenwellen, Führungsbahnen, Laufbahnen für Zylinderrollen- bzw. Wälzlager, Wälzlagerringe für Speziallager, Leichtbau-Wälzschraubspindeln, Schneiden für Industriemesser, Einsätze für Umformwerkzeuge, Werkzeuge zur spanenden Bearbeitung, Sägebänder, Gleitlagerschalen usw. Ein weiterer Einsatzfall sind mechanisch und gleichzeitig durch Reibung oder Stromdurchgang intensiv thermisch beanspruchte Halbzeuge bzw. Bauteile, die zur intensiveren Wärmeableitung an der Plattiergrenze mit integrierten Kühlkanälen versehen sind.

Es ist allgemein bekannt, zum stoffschlüssigen Fügen von Bändern oder Blechen das Laserstrahlschweißen einzusetzen. Dabei werden die zu verschweißenden Kanten der Bänder oder Bleche in der Regel über eine oder zwei Walzen derart zusammengeführt, dass sie einen sich auf den Wert Null verengenden Spaltgrund bilden. Der Laserstrahl wird zu einem Strichfokus geformt, dessen Strahlachse auf die Fügelinie am Spaltgrund gerichtet ist und dessen Breite etwa der Breite der Bänder oder der Überlappzone der Bleche entspricht. Der Laserstrahl wird symmetrisch ausgerichtet, so dass die Strahlanteile in der Fügeebene direkt in den Spaltgrund zielen, während der überwiegende Teil der Laserstrahlung nahezu streifend auf die beiden gegenüberliegenden Bandkanten auftrifft und unter Mehrfachreflexion in den Spaltgrund reflektiert wird. Da der Auftreffwinkel auf die Bandinnenseite sehr klein ist, wird bei einem normalerweise zirkular polarisierten Laserstrahl relativ viel Energie auf einer relativ großen Fläche absorbiert, wodurch nicht genügend Laserenergie direkt in den Spaltgrund gelangt. Das hat drei Konsequenzen: Zum Einen wird das Schmelzbad größer, zum Anderen reduziert sich die Schweißgeschwindigkeit stark und die Schmelzbadlebensdauer nimmt zu. Ein größeres Schmelzbad hat jedoch nachteilige Konsequenzen hinsichtlich des Fügens von schwer schweißbaren Werkstoffkombinationen.

Durch DE 3713975 ist ein Verfahren und eine Vorrichtung bekannt geworden, die bewirken, dass die Energieabsorption viel konzentrierter an der Fügestelle im Spaltgrund erfolgt. Dazu wird Laserstrahlung verwendet, die ausschließlich parallel zur Fügespaltebene polarisiert ist. Dadurch wird die Laserstrahlung mit minimal möglichem Absorptionsverlust durch Mehrfachreflexion in die Fügelinie im Spaltgrund reflektiert. Die Folge ist eine sehr hohe Leistungsdichte, die zu einem örtlich sehr begrenzten Aufschmelzen der beiden Bandinnenseiten direkt im Spaltgrund führt. Dabei ist es nicht erforderlich, die beiden Bänder oder Bleche wesentlich zusammenzudrücken, um eine hinreichende und Bindefehler freie Verschweißung zu erzielen, d. h. die Walzkraftbeaufschlagung dient im Wesentlichen nur zur Positionierung der Fügekanten, aber nicht zu einer Deformation während des Fügens. Zur Verbesserung der metallurgischen Eigenschaften und zur Nahtglättung ist vorgesehen, die beiden Fügeteile im Bereich der beiden Nahtenden an den Enden der Fügelinie vor- und / oder nachzuheizen. Dazu wird vorgeschlagen, den Laserstrahl zu teilen, einen weiteren Laser einzusetzen oder lokal eine Hochfrequenzbestrahlung vorzusehen. Dadurch ist die Vor- und / oder Nachheizung auf die beiden Nahtenden begrenzt und kann keinen oder nur einen äußerst beschränkten Einfluss auf die Beeinflussung der lokalen metallurgischen Eigenschaften der Schweißnaht im Inneren der Bänder bzw. der Bleche ausüben.

Hinsichtlich der fügbaren Werkstoffkombinationen besteht der wesentlichste Mangel dieses Verfahrens darin, dass trotz relativ hoher Schweißgeschwindigkeiten, kleiner Schmelzbadlängen und Schmelzbadlebensdauern Werkstoffkombinationen, die in der Schmelze spröde intermetallische Phasen bilden oder die während der Schnellabkühlung martensitisch aufhärten, nicht rissfrei schweißbar sind. Die Ursache des Mangels besteht in der Notwendigkeit, die Werkstoffe zum Fügen anzuschmelzen.

Zum Fügen von Werkstoffkombinationen ohne schmelzflüssige Phase werden Plattierverfahren verwendet. Bekannt sind neben dem Sprengplattieren, das sehr aufwändig ist, nicht für lange, schmale Bandprodukte genutzt werden kann und sich nur für größere, ebene Blechtafeln eignet, das Kaltwalzplattieren und das Warmwalzplattieren.

Um beim Kaltwalzplattieren eine befriedigende Verbindungsfestigkeit zu erzielen, ist eine Schwellformänderung von mindestens 30 % in einem Kaltwalzstich erforderlich (siehe: Jürgen Hirsch (Hrsg.): "Walzen von Flachprodukten", S. 15). Das heißt, dass im Gegensatz zum Laserstrahlschweißen das Aufbringen einer Walzkraft in einer Höhe, die zu einer intensiven Kaltumformung der Fügepartner führt, prinzipiell notwendig ist, um eine mechanisch ausreichend belastbare Fügeverbindung zu erhalten. Ein wesentlicher Mangel des Kaltwalzplattierens besteht darin, dass die Werkstoffkombinationen, die sich dafür eignen, begrenzt sind (siehe Zeitschrift "Aluminium", 56. Jahrgang, Heft 2, S. 147-149). Die Ursachen dafür bestehen darin, dass insbesondere höherfeste Werkstoffe nicht in einem Walzstich schädigungsfrei mit den erforderlichen Umformgraden umgeformt werden können bzw. dass beim Kaltwalzplattieren von Werkstoffkombinationen mit sehr stark unterschiedlichen Fließspannungen die gesamte Deformation im weicheren Werkstoff stattfindet und dieser dadurch zerreißt.

Ein weiterer Mangel besteht darin, dass das Kaltwalzplattieren gerätetechnisch sehr aufwändig ist. Eine Ursache hierfür liegt darin, dass sehr hohe Walzkräfte und dementsprechend große und steife Walzgerüste notwendig sind. Darüber hinaus werden hohe Anforderungen an die Reinheit und Oxidationsfreiheit der Oberflächen gestellt, denen durch aufwändige Beiz- und Waschanlagen entsprochen werden muss.

Ein Verfahren, das diese Nachteile zu einem großen Teil vermeidet, wird in DE 19502140 offenbart. Hierbei wird mindestens ein Band oder Blech der in Kontakt zu bringenden Bänder oder Bleche an der Oberfläche seiner Innenseite unmittelbar vor dem physischen Kontakt im Walzspalt und unmittelbar vor der Plattierumformung durch einen Laserstrahl erhitzt. Im Gegensatz zur Patentschrift DE 3713975 wird die Bandinnenseite jedoch nicht aufgeschmolzen. Durch das Erhitzen der Innenseiten des Bandes bzw. des Bleches vor dem Einlauf in den Walzspalt brechen die Oberflächenfilme bzw. Oxidschichten der Werkstoffe bereits unter geringerem Druck auf, als beim reinen Kaltwalzplattieren, so dass schneller als im kalten Zustand eine haftende Verbindung entstehen kann. Dadurch wird entweder, bei einem im Vergleich zum herkömmlichen Kaltwalzplattieren gleichbleibenden Walzdruck, die Verbindungsfestigkeit erhöht oder aber es ist zum Erreichen einer bestimmten Festigkeit ein wesentlich geringerer Druck erforderlich. Typischerweise reicht eine Gesamtdickenabnahme von 0,3 % bis 30 % aus, um eine festhaftende Verbindung zu erzielen.

Damit die eingebrachte Energie voll für die Aktivierung an der Oberfläche zur Verfügung steht und nicht vor dem Walzplattiervorgang in das Innere des Bandes bzw. des Bleches weitergeleitet wird und damit die Verformung des Bandes über die gesamte Dicke erhöht, sollte der Laserstrahl das Band bzw. Blech möglichst nahe an der physischen Kontaktstelle der zu verbindenden Bänder bzw. Bleche beaufschlagen. Die Konzentration der Verformung allein auf die durch den Laser erwärmten obersten Randbereiche der Innenseiten der Bänder bzw. der Bleche ist also erklärtes Ziel der Erfindung. Die Band- bzw. Blechaußenseiten bleiben nahezu kalt. Senkrecht zur Band- oder Blechoberfläche herrscht demnach ein sehr großer Temperaturgradient, der zu einem großen Fließspannungsgradienten und einer Konzentration der Verformung an den Band- bzw. Blechinnenseiten führt. Das Verfahren wäre demnach als laserunterstütztes Kaltwalzplattieren zu klassifizieren.

Bei mittleren Umformgraden von 0,3 bis ca. 30 % und Bandbreiten von ca. 10 mm werden Bandvorschubgeschwindigkeiten von 2,5 bis 5 m/min. erzielt. Die hohen Umformgrade sind weiterhin nötig, wenn sich die Fließspannung der Werkstoffpaarungen, wie z. B. in den angegebenen Paarungen DC04 gegen AlMg3 oder Al99, stark unterscheiden. Diese hohen Umformgrade werden in Kauf genommen, sind aber sehr prozessspezifisch und damit nicht frei wählbar. Sie können deshalb nicht zur Endformgestaltung des Werkstoffverbundes genutzt werden.

Im Vergleich zu dem in DE 3713975 offenbarten Schweißverfahren darf, um ein Aufschmelzen zu vermeiden, der Laserstrahl nicht so stark fokussiert werden. Die prinzipiellen Nachteile des Schweißverfahrens hinsichtlich der Bildung spröder Phasen in der Verbindungszone infolge der Bildung von spröden intermetallischen Phasen in der Schweißzone können mit diesem Verfahren beseitigt werden.

Ein Mangel des Verfahrens besteht jedoch weiterhin dahingehend, dass es für martensithärtende Werkstoffe nicht geeignet ist. Die Ursache dafür besteht darin, dass infolge des im Vergleich zum Bandquerschnitt kleinen erwärmten Volumens die Abkühlgeschwindigkeit durch Selbstabschreckung so groß ist, dass in der Fügezone spröder Martensit entsteht, der zu einer Rissbildung während des Plattierens führen kann und die Möglichkeiten der umformenden Weiterverarbeitung des Verbundhalbzeuges negativ beeinflusst.

Ein weiterer Mangel des Verfahrens liegt in der zu geringen Vorschubgeschwindigkeit und der zu großen nötigen Laserleistung. Das wirkt sich wirtschaftlich sehr nachteilig aus, da sowohl ein Kaltwalzwerk als auch ein Laser hohe Investitionskosten bedingen. Die Ursache dieses Mangels liegt darin, dass die Laserenergie die gesamte Temperaturerhöhung in der Plattierzone bewirken muss.

Das Verfahren nach DE 19502140 erfordert zur Vermeidung des lokalen Aufschmelzens innerhalb der Fügezone eine extrem homogene Leistungsdichteverteilung des Laserstrahles über die gesamte Fügezonenbreite, was eine entsprechende Laserstrahlformung voraussetzt. Eine Anordnung, die das gewährleistet, und zudem noch in der Lage ist, viel größere Blech- oder Bandbreiten zu plattieren und einen höheren energetischen Gesamtwirkungsgrad ermöglicht, ist aus DE 4429913 bekannt. Dazu werden Anordnungen von Laserdiodenbarren vorgeschlagen, die es über geeignete statische oder dynamische Strahlformungssysteme gestatten, die gesamte Fügezonenbreite mit einer konstanten Laserleistungsdichte zu bestrahlen. Zur Verringerung der benötigten Laserleistung und damit der weiteren Verbesserung des energetischen Gesamtwirkungsgrades des Prozesses ist vorgesehen, die zu plattierenden Bänder auf ihren Innenseiten kurz vor der Fügung und dem Einlauf in die Laserbestrahlung durch bandförmig gestaltete Induktionsheizungen vorzuwärmen. Hinweise auf die dazu nötige Vorwärmtemperatur oder über die energetische Arbeitsteilung hinausgehende Zwecke der induktiven Vorwärmung fehlen. Insbesondere ist offensichtlich eine Beeinflussung der Umformung während des Walzplattierens, des Plattierprozesses selbst, eine metallurgische Einflussnahme oder eine Nutzung der induktiven Energie für nachfolgende Umformprozesse nicht beabsichtigt. Hinsichtlich des Einflusses einer induktiven Vorwärmung auf die Bildung von intermetallischen Phasensäumen ist zu beachten, dass es auch ohne eine schmelzflüssige Phase bei zu geringer Abkühlgeschwindigkeit von der Plattiertemperatur bei Werkstoffkombinationen, deren Legierungspartner eine hohe Diffusionsgeschwindigkeit aufweisen, zur Bildung intermetallischer Verbindungen an der Grenzfläche kommen kann.

Der Mangel des Verfahrens besteht darin, dass metallurgisch anspruchsvolle Walzplattierverbindungen nicht rissfrei darstellbar sind. Die Ursache dafür besteht darin, dass weder eine Vorschrift noch eine Prozessführung zur Vermeidung von Rissen in martensithärtenden Werkstoffen bzw. zur Vermeidung von intermetallischen Phasensäumen in dafür anfälligen Werkstoffkombinationen angegeben wird. Damit ist für schwer fügbare Werkstoffkombinationen keine zielführende und sichere Prozessführung möglich.

Ein weiterer Mangel resultiert daraus, dass mit der angegebenen Vorrichtung nur ebene Fügezonen darstellbar sind und nur ebene Bänder mit rechteckigem oder nahezu rechteckigem bzw. quadratischem oder nahezu quadratischem Querschnitt gefügt werden könne. Die Ursache des Mangels liegt darin, dass keine technischen Möglichkeiten für die Umformung bzw. Weiterverformung des gefügten Halbzeuges aus der Warmwalzplattiertemperatur heraus angegeben sind. DE 195 02 140 offenbart ein Verfahren gemäß dem Oberbegriff des Anspruchs 1 und eine Vorrichtung gemäß dem Oberbegriff des Anspruchs 23.

Ziel der hiermit vorgelegten Erfindung ist es, ein neuartiges Warmwalzplattierverfahren und eine dazu geeignete Vorrichtung anzugeben, mit deren Hilfe es möglich ist, hochbelastbare Werkstoffverbunde und Verbundhalbzeuge aus schweißmetallurgisch oder plattiertechnisch bisher nicht beherrschbaren Werkstoffkombinationen effektiv und reproduzierbar herzustellen, das ohne aufwändige Beiz- oder Oberflächenreinigungsanlagen auskommt, reproduzierbar Aufschmelzungen oder schmelzflüssige Phasen in der Fügezone vermeidet, imstande ist, sehr hohe Vorschubgeschwindigkeiten zu realisieren, an deutlich von rechteckigen oder quadratischen Querschnitten abweichenden Querschnittsformen anwendbar ist und gestattet, einen Warmumformprozess in den Fügeprozess zu integrieren.

Der Erfindung liegt die Aufgabe zugrunde, eine Temperaturführung und ein lokales Zusammenwirken von Temperatur und plastischem Umformen und Mittel zu ihrer Darstellung anzugeben, die es gestatten, die Entstehung von martensitischen Umwandlungen oder intermetallischen Phasensäumen während oder nach dem Warmwalzplattieren auszuschließen, schädliche Auswirkungen von Oxiden und Verunreinigungen auf die Festigkeit des Werkstoffverbundes zu verhindern sowie den nötigen Anteil an Laserenergie zu reduzieren.

Erfindungsgemäß wird die Aufgabe mittels eines neuartigen Verfahrens zum Herstellen von metallischen Werkstoffverbunden und Verbundhalbzeugen durch Warmwalzplattieren eines Bandes mit einem Band des Auflagewerkstoffes oder den Bändern der Auflagewerkstoffe mittels Laser und induktiver Unterstützung, wie in Anspruch 1 ausgeführt, sowie einer dafür geeigneten Vorrichtung, wie im Anspruch 23 angegeben, gelöst. Verfahrenstechnisch besonders vorteilhafte Lösungen sind in den Unteransprüchen 2 bis 22 niedergelegt. Vorrichtungstechnisch vorteilhafte Weiterbildungen sind in den Unteransprüchen 24 bis 26 angegeben.

Dazu wird erfindungsgemäß von den vier neuen Erkenntnissen Gebrauch gemacht, dass sich durch eine geeignete Kopplung eines induktiv erzeugten Temperaturfeldes mit einem durch Laserbestrahlung erzeugten Temperaturfeld der Prozess des Warmwalzplattierens qualitativ dergestalt verändern lässt,

- dass die zusätzlich eingebrachte induktive Energie zu einer überproportionalen Steigerung der Vorschubgeschwindigkeit genutzt werden kann, so dass trotz der zusätzlichen Energie die Temperaturbereiche, in denen für die mechanischen Eigenschaften schädliche Phasen (intermetallische Verbindungen, Ausscheidungen) oder metallurgische Unverträglichkeiten (Gussgefüge, lokale Aufschmelzungen) auftreten, schneller durchlaufen oder sicher vermieden werden können,
- dass es durch die zusätzliche induktive Energie ausreicht, anstelle mit einem fokussierten Laserstrahl mit einem teilfokussierten Laserstrahl zu arbeiten, was die Prozessreproduzierbarkeit deutlich verbessert,
- dass es bei geeigneter Überlagerung der induktiven und der Laser erzeugten Temperaturfelder sowie des Walzgrades möglich ist, die für das Entstehen der atomaren Bindung zwischen den Bändern notwendige (Relativ-)Verformung in einer Umformzone einstellbarer Größe sehr reproduzierbar zu erzeugen
- und dass die durch das inhomogene Temperaturfeld sich ergebende inhomogene Fließspannungsverteilung zu einer Umformwulst vor der Plattierzone führt, die zu einer Verbesserung der Reproduzierbarkeit der Einkopplung der Laserstrahlung genutzt werden kann.

Entsprechend dem Anspruch 1 besteht die erfindungsgemäße Lösung darin, dass

a. eine inhomogene Kurzzeiterwärmung von mindestens einem der Bänder (1, 2) oder (3) infolge eines gleichzeitigen Energieeintrages durch elektromagnetische Induktion und Laserbestrahlung stattfindet, wobei der induktive Anteil am Gesamtenergieeintrag mindestens 65 % beträgt.

b. die induktive Erwärmung in der Banddurchlaufrichtung (44) vor der Laserbestrahlung erfolgt,

c. die Laserbestrahlung direkt auf oder unmittelbar vor die Umformzone (35) der Bandinnenseiten (38, 39) oder (40) unmittelbar vor dem Walzeneingriff gerichtet ist und die gesamte Breite der Umformzone (35) mit einer konstanten Intensität umfasst,

d. die laserinduzierten Temperaturfelder $T_L$ mit den induktiv erzeugten Temperaturfeldern dergestalt überlagert werden, dass am Ort der Umformzone (35) ein Temperaturgradient senkrecht zur Walzebene herrscht und die Maximaltemperatur in der Plattierebene unterhalb der Schmelztemperatur $T_S$ des Bandes (1, 2) oder (3) mit der niedrigsten Schmelztemperatur $T_S$ liegt,

e. ein Warmwalzen der mit einem Temperaturgradienten versehenen Bänder (1,2) und / oder (3) in einem Stich erfolgt,

f. und ein Warmwalzgrad zwischen 1 und 70 % eingestellt wird.

Besonders vorteilhafte Warmwalzgrade liegen zwischen 2 und 10 %. Wenn jedoch z. B. neben dem Plattieren noch eine Formgebung erreicht werden soll, können auch ohne Nachteile die angegebenen größeren Warmwalzgrade gewählt werden.

Durch die Überlagerung der laserinduzierten Temperaturfelder $T_L$ mit den induktiv erzeugten Temperaturfeldern $T_i$ entsteht ein Gesamttemperaturfeld, dessen Höhe an den Bandinnen- und Bandaußenseiten, dessen Temperaturgradient und dessen räumliche Ausdehnung in mehrfacher Hinsicht den Warmwalzplattierprozess beeinflusst. Mit den Temperaturgradienten senkrecht zu den Bändern wird in Abhängigkeit von der Höhe der Fließspannung in den Bändern und deren werkstoffabhängiger Temperaturabhängigkeit der lokale Umformgrad zwischen den Bändern und damit die Relativumformung zwischen ihnen eingestellt. Weiterhin bestimmt der Temperaturgradient über die Temperaturabhängigkeit der Fließspannung und den Walzgrad auch die Ausdehnung der Umformzone. Innerhalb der Umformzone nimmt der Umformgrad mit Annäherung an die Bandinnenseiten schnell zu, so dass eine Umformwulst entsteht, in die der Laserstrahl sehr reproduzierbar einkoppeln kann. Der überwiegende Anteil der Prozessenergie kommt von der Induktion. Mit Werten von größer als 65 % der eingekoppelten Gesamtenergie ergeben sich einerseits eine effektive arbeitsteilige Zusammenarbeit zwischen teurer Laserenergie und preisgünstiger induktiver Energie und andererseits um mindestens den Faktor 2 höhere Plattiergeschwindigkeiten $v_P$.

Im Anspruch 2 wird ausgeführt, welche Parameter erfindungsgemäß gewählt werden müssen, um die zum Warmwalzplattieren nötige Relativverformung zwischen den Bändern zu erzeugen.

Anspruch 3 nutzt in vorteilhafter Weise die Erkenntnis aus, dass durch das Warmwalzen neben dem Plattieren zugleich auch die Endformgestaltung des Halbzeuges möglich ist. Dabei kann der Walzgrad und die Walzengeometrie so eingestellt werden, dass entweder nur eine Umformung in der oben beschriebenen prozessrelevanten Umformzone auftritt oder das gesamte Halbzeug umgeformt wird. Der letztere Fall lässt sich besonders günstig realisieren, wenn die Walzen als sogenannter Türkenkopf ausgeführt sind. Diese Variante ist besonders gut geeignet für Halbzeuge einfacher Geometrie und hoher Geometriegenauigkeit ohne nachfolgende Bearbeitungsprozesse.

Mit dem Anspruch 4 wird davon ausgegangen, dass mit dem Walzenpaar für das Warmwalzplattieren nur die Fügeverbindung erstellt wird und die Zielgeometrie des Halbzeuges erst durch eine oder mehrere nachfolgende Profilierwalzen erzeugt wird. Die Variante ist bevorzugt anwendbar, wenn Halbzeuge komplizierterer Querschnittsgeometrien hergestellt werden sollen. Bei diesem Walzprofilieren lässt sich vorteilhaft die Temperatur vom Warmwalzplattieren zur Erhöhung der beherrschbaren Umformgrade nutzen. Darüber hinaus ist die Nutzung der Plattiertemperatur für die nachfolgenden Umformprozesse energetisch günstig.

Bei thermisch unempfindlichen Werkstoffen, wie z. B. Stählen, kann, wie im Anspruch 5 dargelegt, eine durchgreifende induktive Erwärmung der Bänder erfolgen. Dazu werden günstiger Weise Induktoren verwendet, die die Bänder komplett umfassen. Wird darüber hinaus noch der Abstand zwischen den Umformzonen und den Induktoren ausreichend groß und die Induktionsfrequenz entsprechend klein gewählt, wird eine nahezu homogene induktive Durchwärmung der Bänder erreicht. Die homogene induktive Durchwärmung ist vorteilhaft bei thermisch umwandlungsfähigen Werkstoffen, z. B. martensitisch härtenden Stählen, weil sie eine homogene Ausgangsstruktur für nachfolgende Wärmebehandlungsschritte liefert. Anspruch 6 gibt eine Lehre für die Wahl der Größe der induktiv und der per Laser erzeugten Temperaturen an den Bandinnenseiten in der Umformzone. Wesentlich ist, dass die maximale Temperatur $\Delta T_{ges}$ kleiner ist als die Schmelztemperatur $T_S$ des Bandes mit der niedrigsten Schmelztemperatur und maximal 98% der Schmelztemperatur erreicht.

Indem die induktiv erzeugte Temperaturdifferenz $\Delta T_i$ zwischen 2,2- und 16-mal so groß ist wie die durch den Laser erzeugte Temperaturdifferenz $\Delta T_L$, wird eine sowohl funktionell als auch wirtschaftlich sinnvolle energetische Arbeitsteilung erreicht. Mit dieser energetischen Arbeitsteilung lassen sich bei üblichen Laserleistungen (zwischen 4 und 20 kW) um den Faktor 2 bis 5 höhere Plattiergeschwindigkeiten erreichen. Darüber hinaus gestattet erst die Kombination einer hohen lokalen Plattiertemperatur an den Bandinnenseiten mit einer davon relativ unabhängig wählbaren niedrigen und induktiv erzeugten Vorwärmtemperatur im übrigen Bandquerschnitt eine mechanisch ausreichend stabile Bandzuführung und -abführung.

Es hat sich ebenfalls bei den Untersuchungen gezeigt, dass es vorteilhaft ist, bei verschiedenen Werkstoffen, Ausgangs- und Zielgefügen die induktive Vorwärmtemperatur $\Delta T_i$ in ganz bestimmten Bereichen auswählen.

Dabei ist es besonders vorteilhaft, wenn die Temperatur der induktiven Erwärmung $\Delta T_L$ so gewählt wird, dass durch diese Kurzzeitwärmebehandlung das warmwalzplattierte Band (5) gleichzeitig günstige Weiterverarbeitungseigenschaften erhält. Beispielsweise kann es hierfür in bestimmten Anwendungsfällen günstig sein, wenn die die Temperatur der induktiven Erwärmung $\Delta T_i$ so gewählt wird, dass im warmwalzplattierten Band ein Abbau der Kaltverfestigung und eine dynamische Rekristallisation in der Umformzone (35) stattfindet.

Für bestimmte Anwendungsfälle ist es vorteilhaft, wenn die Temperatur der induktiven Erwärmung $\Delta T_i$ so gewählt wird, dass im warmwalzplattierten Band (5) ein Normalisieren stattfindet oder bei anderen Anwendungsfällen, wenn die Temperatur der induktiven Erwärmung $\Delta T_i$ so gewählt wird, dass im warmwalzplattierten Band (5) ein Lösungsglühen abläuft.

Die Erfindung lässt sich auch sehr vorteilhaft für das Plattieren von thermisch empfindlichen Werkstoffen und Werkstoffkombinationen einsetzen, bei denen zwischen den Fügepartnern eine schweißtechnische Unverträglichkeit besteht. Solche schweißtechnischen Unverträglichkeiten können z. B. durch die Bildung spröder intermetallischer Verbindungen in der Grenzfläche zwischen den beiden Fügepartnern zustande kommen. Das ist z. B. bei den Werkstoffkombinationen Ti / Al, Ti / Fe, Al / Fe der Fall. Wird die Dicke der intermetallischen Verbindungsschicht größer als ein bestimmter Maximalwert (in der Regel kleiner 5-10 $\mu$m), ist das plattierte Halbzeug wegen Sprödbruchgefahr nicht darstellbar oder zumindest nicht einsetzbar. Für diesen Fall werden, so wie in Anspruch 7 ausgeführt, nur die Bandinnenseiten induktiv erwärmt und die Induktoren unmittelbar vor der Lasereinwirkzone angeordnet. Damit sind durch die kalten Bandaußenseiten hohe Abschreckgeschwindigkeiten und damit sehr kurze Verweilzeiten bei kritischen hohen Temperaturen, die zu einer Bildung einer Grenzschicht aus intermetallischen Phasen führen, gewährleistet. Wegen der zum Zeitpunkt des Starts der Lasereinwirkung sehr hohen Temperatur an den Bandinnenseiten kann die nötige Temperaturerhöhung durch die Lasereinwirkung verhältnismäßig klein gewählt und eine hohe Plattiergeschwindigkeit erreicht werden. Zur Reduzierung der Eindringtiefe des induktiv erzeugten Temperaturfeldes werden in diesem Fall Hochfrequenzgeneratoren mit Schwingfrequenzen vorzugsweise zwischen 100 und 500 kHz verwendet. Die hohe Plattiergeschwindigkeit ermöglicht höhere Abkühlgeschwindigkeiten und damit eine Reduzierung der Zeitspanne innerhalb derer sich spröde intermetallische Verbindungsräume bilden können. Damit sind auch walzplattierte Halbzeuge aus schwer fügbaren Werkstoffkombinationen wie z. Ti / Al, Ti / Fe, Fe / Al wirtschaftlich fertigbar.

Die Tendenz zur Bildung von intermetallischen Verbindungssäumen kann zusätzlich reduziert werden, wenn wie ebenfalls in Anspruch 7 als vorteilhaft dargelegt, das walzplattierte Band unmittelbar nach Verlassen des Walzenpaares in einer Kühlstrecke schnell abgekühlt wird.

Das erfindungsgemäße Vorgehen gestattet es sowohl, so wie in Anspruch 9 ausgeführt, ein nur einseitig plattiertes Halbzeug oder wie in Anspruch 8 vorgestellt ein beidseitig plattiertes Halbzeug herzustellen.

Wie in Anspruch 10 beispielhaft herausgegriffen, stellt ein bevorzugtes Anwendungsfeld der Erfindung das Herstellen von walzplattierten Halbzeugen aus Vergütungsstählen, Werkzeugstählen oder hochlegierten nichtrostenden Stählen und Baustählen dar. Hiermit lassen sich z. B. preisgünstig verschleißbeständige Bauteile herstellen. Sie können einfach und ohne Einbuße an ihrer Verschleißbeständigkeit von der Gegenseite her spanend weiter verarbeitet werden und z. B. verschraubt oder auch rissfrei verschweißt werden. Ebenso gut können jedoch auch Bänder aus Stellit oder anderen Hardfacing-Legierungen plattiert werden.

Bei der Realisierung hoher Walzplattiertemperaturen oder beim Warmwalzplattieren oxidationsanfälliger Werkstoffe kann die induktive Erwärmung, die Lasereinwirkung, der Transport des erwärmten Bandes, das Walzplattieren und gegebenenfalls das Walzprofilieren, so wie in Anspruch 11 erläutert, unter Schutzgas stattfinden. Bei oxidierten Bändern kann anstelle des Schutzgases, so wie ebenfalls in Anspruch 11 dargelegt, auch ein reduzierendes Gas oder Gasgemisch verwendet werden.

Die speziell für das Walzplattieren der Werkstoffkombination Vergütungsstahl / Baustahl erfindungsgemäß zu wählenden Parameterbereiche für die induktiv und die mittels Laser erzeugten Temperaturen $\Delta T_i$ bzw. $\Delta T_L$ werden in Anspruch 12 angegeben.

Falls das Halbzeug aus dem Vergütungsstahl und einem Baustahl nachfolgend noch spanend bearbeitet werden soll, kann, sowie in Anspruch 13 dargelegt, die Abkühlgeschwindigkeit des plattierten Halbzeuges durch Durchlaufen einer Abkühlstrecke so eingestellt werden, dass ein normalisiertes Gefüge entsteht.

Anspruch 14 bildet den erfindungsgemäßen Gedanken weiter für alle Halbzeuge bzw. Bauteile, die unter einem linien- bzw. bahnförmigen Verschleißkontakt stehen. Das können beispielsweise, so wie in Anspruch 15 ausgeführt, integrierte Wälzlager sein. Ebenso gut können es aber auch Verschleißschutzleisten für eine Vielzahl von Anwendungen z. B. bei Kettenförderern, Bandführungen bei der Erz-, Erd- oder Baustoffbewegung, in Walzwerken, der polygraphischen Industrie, dem Werkzeugmaschinenbau oder dem Motorenbau sein. Die Breite und Dicke des Bandes des Auflagewerkstoffes brauchen dabei nur geringfügig breiter bzw. dicker zu sein, als die Zone, innerhalb der die Verschleißbeanspruchung bzw. die Belastungsspannung auf den durch die Grenzfläche bzw. den Grundwerkstoff ertragbaren Wert abfällt.

In Anspruch 16 wird das erfindungsgemäße Grundprinzip für den Fall weiter entwickelt, dass Werkstoffkombinationen gefügt werden sollen, deren metallurgische Unverträglichkeit keinerlei thermische Walzplattierprozesse zulässt. Dazu wird zwischen dem Band des Auflagewerkstoffes und dem Band des Grundwerkstoffes ein dünnes Band eines Zwischenlagewerkstoffes eingeführt. Der Werkstoff dieses Bandes wird so gewählt, dass weder mit dem Grundwerkstoff noch mit dem Auflagewerkstoff metallurgische Unverträglichkeiten, wie z. B. die Bildung spröder intermetallischer Grenzschichten, bestehen. Ein solcher Zwischenlagewerkstoff kann bei Hochtemperaturanwendungen auch als Diffusionsbarriere zur Verhinderung der Versprödung durch Interdiffusion während des Einsatzes dienen. Da die Bänder aus dem oder den Zwischenlagewerkstoffen sehr dünn gewählt werden, ist deren Wärmekapazität so gering, dass sie nicht separat erwärmt werden müssen, sondern sich im Kontakt mit der Umformzone oder dem reflektierten Anteil der Laserstrahlung instantan erwärmen. Beispielsweise kann ein solcher Zwischenlagewerkstoff aus einer 200 $\mu$m dicken Nickel-Folie bestehen.

Besonders vorteilhaft lässt sich das Verfahren, so wie in Anspruch 17 ausgeführt für die Fertigung von Verschleißleisten und Führungsbahnen einsetzen. Dazu wird das Bauteil schon endkonturnah oder -fertig als Auflagewerkstoff eingesetzt.

Insbesondere für elektrische oder magnetische Funktionen werden vielfach Schichtverbundwerkstoffe aus Stapeln zweier abwechselnd angeordneter Werkstoffe benötigt. Wie in Anspruch 18 dargelegt, lassen sich solche Werkstoffverbunde durch eine ein- oder mehrmalige Wiederholung des erfindungsgemäßen Warmwalzplattierprozesses herstellen.

Tribologisch oder elektrisch besonders hoch beanspruchte Bauteile sind höher belastbar bzw. weisen eine längere Lebensdauer auf, wenn es gelingt, die während des bestimmungsgemäßen Einsatzes entstehende Wärme unmittelbar abzuführen. Das kann mit integrierten Kühlkanälen erreicht werden. Eine besonders günstige Herstellungsvariante für solche funktionsintegrierten Halbzeuge ist in Anspruch 19 entwickelt.

Der Erfindungsgedanke ist nicht nur darauf beschränkt, dass die verwendeten Bänder des Grundwerkstoffes und / oder des Auflagewerkstoffes einen ebenen rechteckförmigen Querschnitt haben. Genauso gut kann, wie in Anspruch 20 formuliert, der Querschnitt des oder der Auflagebänder oder auch der Querschnitt des Bandes des Grundwerkstoffes vom Rechteckquerschnitt drastisch abweichen. So können z. B. profilierte Bänder oder sogar stranggepresste Halbzeuge verwendet werden. Dieser neue Freiraum wird durch die Besonderheit des erfindungsgemäßen Verfahrens des Laserinduktionswalzplattierens ermöglicht, dass zur Herstellung einer atomaren Verbindung nur sehr geringe Plattierumformgrade nötig sind. So kann z. B. erreicht werden, dass erstmals Strangpress- oder Blechprofile mit einer nur geringfügigen Änderung des Querschnittes artfremd walzplattiert werden.

So wie in Anspruch 21 ausgeführt, kann die Plattierfläche auch auf mehrere Teilflächen aufgeteilt werden. Durch die Verwendungsmöglichkeiten von Bändern mit nichtebenen Begrenzungsflächen und die Aufteilung der Plattierzone auf mehrere Teilzonen können entsprechend Anspruch 22 auch mehrfunktionale Hohlstrukturen aus konventionell nicht oder nicht ausreichend gut fügbaren Werkstoffkombinationen hergestellt werden.

Die erfindungsgemäße Vorrichtung zur Durchführung des Warmwalzplattierverfahrens besteht entsprechend Anspruch 23 aus

- zwei bis drei induktiven Erwärmungsstationen mit den dazu gehörigen Generatoren und Induktoren
- einem oder zwei Lasern mit ein oder zwei Strahlformungseinheiten
- einem Walzenpaar zum Walzplattieren
- zwei oder drei Abhaspelstationen
- und einer Aufhaspelstation oder Ablängstation.

Die Walzkraft zum Walzplattieren ist einstellbar ausgeführt. Ebenso kann der Abstand zwischen den Induktoren und den Lasereinwirkzonen eingestellt werden. Zur Behandlung von oxidationsempfindlichen Werkstoffen kann die Bandführung oder die gesamte Anordnung unter Schutzgas angeordnet sein.

Wie in Anspruch 24 ausgeführt, kann ein Temperaturregelsignal, das unmittelbar vor bzw. in den Lasereinwirkzonen abgenommen wird, verwendet werden, um die induktive bzw. Laserleistung zu regeln.

Das Profilieren des warmgewalzten Bandes kann, so wie in Anspruch 25 dargelegt, dadurch realisiert werden, dass das Walzenpaar zum Walzplattieren eine profilierte Walze aufweist und/odernach dem Walzenpaar ein Satz Profilierwalzen angeordnet ist.

Zusätzlich kann vorteilhafterweise unmittelbar nach dem Walzenpaar zum Walzplattieren eine Kühlstrecke (25) angeordnet sein und/oder sich nach dem Walzenpaar zum Walzplattieren (23) bzw. nach dem Satz von Profilierwalzen (26) eine Wärmebehandlungsstrecke (27) befinden.

Es kann vorteilhaft sein, für die einzelnen Anwendungsfälle bestimmte Ausführungsformen für die Strahlformungseinheiten des Laserstrahles auszuwählen. Dabei kann es vorteilhaft sein, wenn die Strahlformungseinheit (11) des Laserstrahles (10) aus einem Strahlhomogenisator besteht, der einen Strichfokus erzeugt, dessen Breite auf die Breite des schmalsten Bandes der Bänder G, A oder B (1,2 oder 3) und dessen Höhe auf die Höhe des Umformwulstes (23) abgestimmt ist und/oder wenn die Strahlformungseinheit (11) des Laserstrahles (10) aus einem Facettenspiegel oder einer Kombination eines Facettenspiegels mit einem Zylinderspiegel besteht. Wenn beispielsweise entsprechend dem Verfahrensanspruch 21 die Plattierfläche in mehrere Teilzonen aufgeteilt ist, können auch mehrere Strahlformungseinheiten oder Strahlhomogenisatoren verwendet werden.

Im Falle der Erzeugung warmwalzplattierter Halbzeuge aus kompliziert geformten Blech- oder Strangpressprofilen, die mehrere Teilzonen der Plattierfläche aufweisen, sind die Walzen, wie beispielsweise in Anspruch 26 beschrieben, dergestalt profiliert, dass sie die Walzplattierkräfte im Wesentlichen nur in dem Bereich der Teilzonen der Plattierflächen aufbringen. Damit ist es möglich, auch sehr dünnwandige, kompliziert geformte Halbzeuge herzustellen.

Das erfindungsgemäße Verfahren des Laserinduktionswalzplattierens bietet mehrere Vorteile:

- qualitative und quantitative Erweiterung der plattierbaren Werkstoffpalette in Richtung höher- und höchstfeste metallische Werkstoffe, härtbare Stähle, hochlegierte Stähle und schweißmetallurgisch unverträgliche Werkstoffkombinationen
- deutliche Erhöhung der Walzplattiergeschwindigkeit gegenüber dem Laserwalzplattieren bei gleichzeitiger Verringerung der nötigen Laserleistung
- Verringerung der Energiekosten durch energetische Arbeitsteilung zwischen induktiver Erwärmung und Lasererwärmung
- qualitativ hochwertige metallurgische Bindung mit hoher mechanischer Belastbarkeit zwischen den zu fügenden Bändern ohne Anwesenheit einer durch eine schmelzflüssige Phase hervorgerufenen Gussstruktur
- Unterdrückung bzw. Reduzierung der Tendenz zur Bildung intermetallischer Phasensäume und der Grobkornbildung in der Plattierzone durch hohe lokale Abkühlgeschwindigkeit infolge großem Temperaturgradienten an der Bandinnenseite und hoher Walzplattiergeschwindigkeit
- Einsetzbarkeit auch für komplizierter geformte Halbzeuge
- Herstellbarkeit multifunktionaler Halbzeuge
- gute mechanische Bandführbarkeit und -umformbarkeit durch eine unabhängig von der Plattiertemperatur einstellbare Vorwärmtemperatur des Bandquerschnittes.

Die Erfindung wird mittels der nachfolgenden Ausführungsbeispiele näher erläutert. Sie werden anhand der Fig. 1 bis 8 näher dargestellt.

**Es zeigt:**

Fig. 1:   Eine Prinzipskizze zur Erläuterung des erfindungsgemäßen Verfahrens

Fig. 2:   Die Temperaturverläufe in dem Band des Grundwerkstoffes G (Position P1) und des Auflagewerkstoffes A (Position P2) nach induktiver Erwärmung sowie in den Bändern nach der Lasereinwirkung (Positionen P4 und P5) sowie nach dem Warmwalzplattieren (Position P7). Die Lage der Positionen P1 bis P7 kann dem Schema des Verfahrensablaufes in Fig. 1 entnommen werden.

Fig. 3:   Metallographische Querschliffe eines erfindungsgemäß laserinduktionswalzplattierten Bandes

3 a: Bandquerschnitt nach Laserinduktionswalzplattieren und mechanischer Bearbeitung
3 b: Höher vergrößertes metallographisches Bild der plattierten Grenzfläche zwischen Grundwerkstoff und Plattierwerkstoff
3 c: Bandquerschnitt nach Härten des Halbzeuges

Fig. 4:   Härteverlauf quer zur plattierten Grenzfläche in verschiedenen Bearbeitungsstadien

Fig. 5:   Rissfrei gedrilltes laserinduktionsplattiertes Halbzeug

Fig. 6:   Prinzipskizze der Vorrichtung zum Laserinduktionswalzplattieren

Fig. 7:   Abfolge von Prozessschritten zur Herstellung von Halbzeugen für Industriemesser

Fig. 8:   Auswahl von möglichen Geometrien von Verbund-Halbzeugen hergestellt über Laserinduktionswalzplattieren

Fig. 9:   Verschiedene Ausführungsformen eines Maraging-Stahl verstärkten Kupfer-Bandes für Hochstromanwendungen mit integrierten Kühlkanälen

Fig. 10: Querschnitt eines hochbelastbaren Bimetall-Wärmetauschers

**Ausführungsbeispiele:**

Ausführungsbeispiel 1:

Das erfindungsgemäße Verfahren des Laserinduktionswalzplattierens soll anhand der bisher nur schwer plattierbaren Werkstoffkombination Vergütungsstahl mit nicht härtbaren Stählen erläutert werden. Das Ausführungsbeispiel bezieht sich verfahrensseitig vorrangig auf die Ansprüche 1 bis 4, 6 bis 8, 16 und 18 bis 20.

Für eine neuartige gebaute Nockenwelle, wie sie z. B. in WO 02/100 588 beschrieben ist, wird ein effektives Herstellungsverfahren für die Nocken gesucht. Die gebaute Nockenwelle besteht aus einem Rohr aus einem schweißbaren Stahl und ringförmigen Nocken aus einem Verbundhalbzeug. Die Nocken weisen eine gehärtete Kipphebelablauffläche aus einem hoch gekohlten Stahl und eine innere Zone aus einem schweißbaren Stahl auf, der mit der Welle verschweißt werden kann. Entsprechend den Belastungsverhältnissen soll die Härtungszonentiefe 2,7 mm betragen und die Nocken sollen 12 mm breit sein. Dem entsprechend soll ein plattiertes Bimetall-Halbzeug aus dem Vergütungsstahl SAE 1055 (1.1518) und dem Baustahl QStE420TM (1.0980) hergestellt werden. Das Halbzeug soll die Endabmaße ($d_p$ =) 3,9 mm x 12,0 mm aufweisen, wobei entsprechend der hohen Wälzverschleißbelastung die Härtungszonentiefe ca. 2,7 mm betragen soll. Dem entsprechend soll die Dicke des härtbaren Teiles des Bimetall-Halbzeuges 2,7 mm betragen.

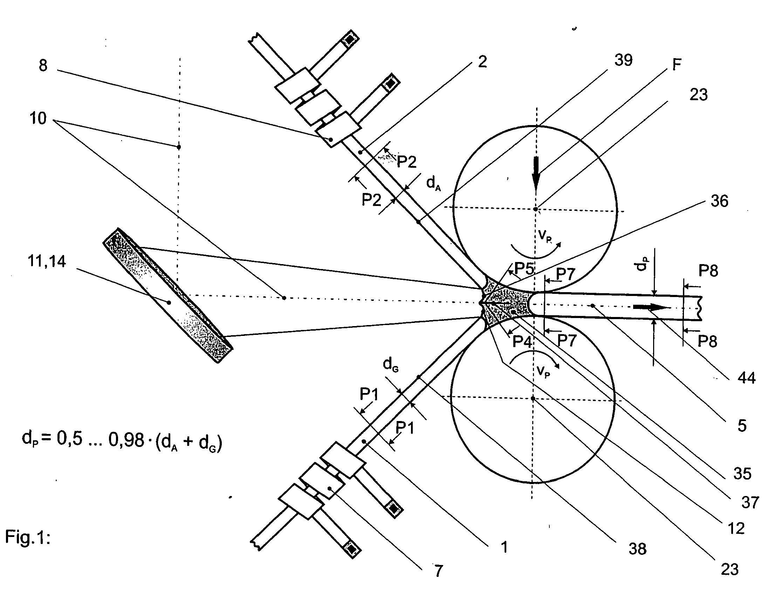

Zum Walzplattieren (siehe Fig. 1) wird von zwei Bändern ausgegangen. Das Band aus dem Vergütungsstahl (Auflagewerkstoff A) hat die Abmaße ($d_A$ =) 3,0 mm x 12,0 mm, während das Band aus dem Baustahl (Grundwerkstoff G) die Abmessung 1,5 mm x 12,0 mm aufweist.

Sowohl das Band aus dem Grundwerkstoff G(1) als auch das Band aus dem Auflagewerkstoff A(2) wird aus einem Coil (15) bzw. (16) entnommen und über je einen Richtwalzensatz (19, 20) geführt. Die Richtwalzensätze werden leicht bremsend eingestellt, so dass die Bänder zwischen den Richtwalzensätzen (19, 20) und dem Walzenpaar für das Warmwalzplattieren (23) unter einer geringen Zugspannung stehen. Als Induktionsgeneratoren (30, 31) werden zwei HF-Generatoren mit einer Leistung von je 25 kW bei einer Frequenz von 200 kHz verwendet. Die Induktoren (7, 8) sind je 12-windig ausgeführt und umfassen die Bänder (1, 2) vollständig. Als Laser (33) wird ein 6 kW-$CO_2$-Laser verwendet. Als Strahlformungseinheit (11) des Laserstrahles (10) und gleichzeitig als Umlenkspiegel und Fokussieroptik (14) dient ein Facettenspiegel. Die Fleckgröße des Laserstrahles (10) beträgt in der Position der Einwirkzone (12) 12,0 mm x 1,5 mm. Das Walzenpaar (23) besteht aus einer oberen glatten Walze und einer unteren profilierten Walze. Letztere weist eine umlaufenden Ausnehmung von 12 mm x 3,8 mm auf. Nach Verlassen des Walzenpaares (23) gelangt das plattierte Band P (5) in eine Ablängstation (28). Hier wird das Band P (5) auf eine einstellbare Länge abgelängt und zum Abkühlen in einem Bandkanal abgelegt. Zwischen den Richtwalzensätzen (19, 20) und der Ablängstation (28) läuft der Prozess unter Stickstoff als Schutzgas ab.

Zum Prozessablauf werden folgende Parameter eingestellt: Laserleistung an der Einwirkzone (12): 5,7 kW; Induktionsleistung des Induktionsgenerators (31) für den Induktor (8) für den Auflagewerkstoff A(2): 22,5 kW; ; Induktionsleistung des Induktionsgenerators (30) für den Induktor (7) für den Grundwerkstoff G (1): 15,0 kW; hydraulischer Walzdruck: 45 bar, Walzplattiergeschwindigkeit $v_P$ = 12 m/min.

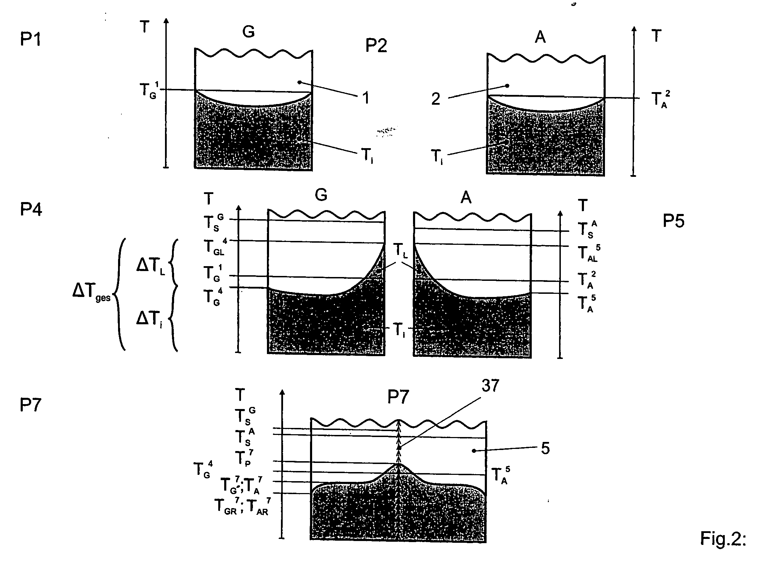

Durch die Einwirkung der induktiven Felder werden an der Position P1 des Grundwerkstoffes G (1) und der Position P2 des Auflagewerkstoffes A(2) folgende Temperaturen erreicht: $T_G^1 \approx 680\ °C$, $T_A^2 \approx 630°C$ (siehe Fig. 2). Beim Erreichen der Lasereinwirkzone sind diese Temperaturen an den Positionen P4 und P5 an der jeweiligen Bandaußenseite auf etwa $T_G^4 \approx 650°C$ und $T_A^5 \approx 610°C$ abgefallen. Durch die Einwirkung des Laserstrahles (10) werden die Bandinnenseiten auf die Temperaturen $T_{GL}^4 \approx 1350°C$ und $T_{AL}^5 \approx 1300°C$ aufgewärmt. Diese Temperaturen reichen aus, um unter Einwirkung der Walzkraft F die beiden Werkstoffe atomar zu verbinden. Nach dem Walzplattieren ist in der Position P7 die Spitzentemperatur in der Position der Walzplattierfläche (37) schon sehr stark gesunken $T_P^7 \approx 900°C$, während sich die Temperatur im Bandinneren angeglichen und sich nur geringfügig verändert hat ($T_G^7 \approx T_A^7 \approx 650°C$). Der mittlere Walzgrad beträgt 9 % und ist damit deutlich geringer als der im Stand der Technik angegebene Mindestwert von 20 % für das Warmwalzplattieren (siehe "walzen von Flachprodukten", Hrsg.: Jürgen Hirsch, Wiley-VCH, 2001, S. 15).

In Bezug zu den in den Ansprüchen 1, 7 und 19 ausgeführten Werten und Relationen werden folgende Verhältnisse erreicht: Die induktive Gesamtenergie beträgt 37,5 kW, die Laserenergie 5,7 kW. Damit beträgt der Anteil der induktiven an der Gesamtenergie 87 %. Der durch Lasereinwirkung erzeugte Temperaturanstieg erreicht $\Delta T_L \approx 610$ K $\approx 0{,}43\ *T_S$ während die durch Induktion hervorgerufene $\Delta T_i \approx 690$ K $\approx 0{,}49\ *T_S$ beträgt. Für den Wert des gesamten

Temperaturanstieges gilt $\Delta T_{ges.} \approx 0{,}93\ T_S$. Die Walzplattiergeschwindigkeit $v_P$ steigt durch die induktive Zusatzenergie um etwa den Faktor 2.

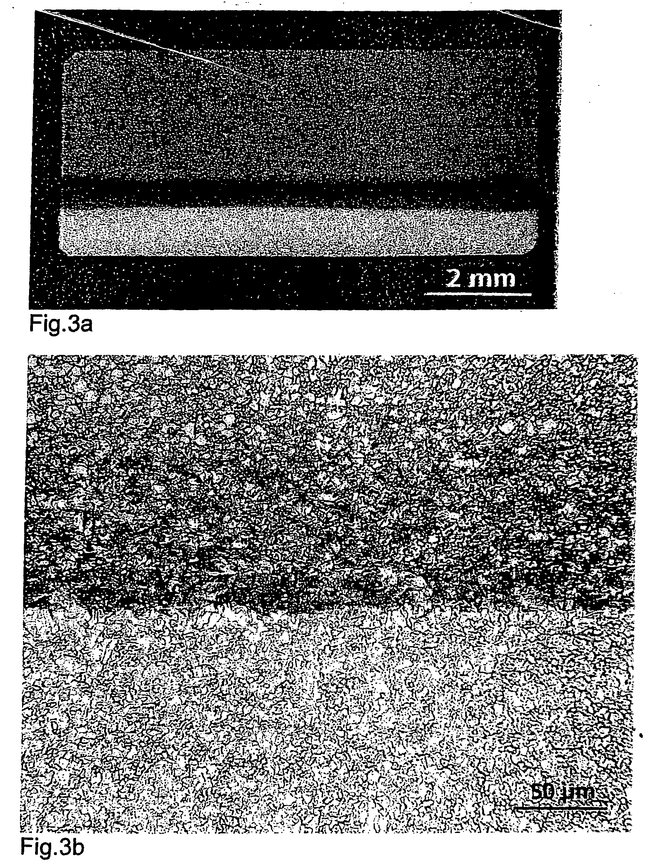

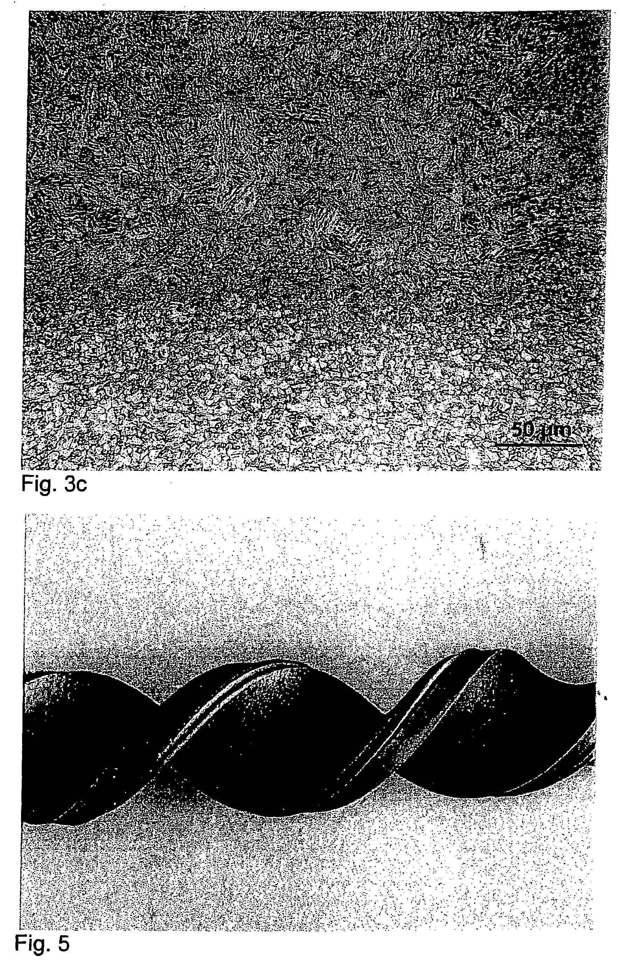

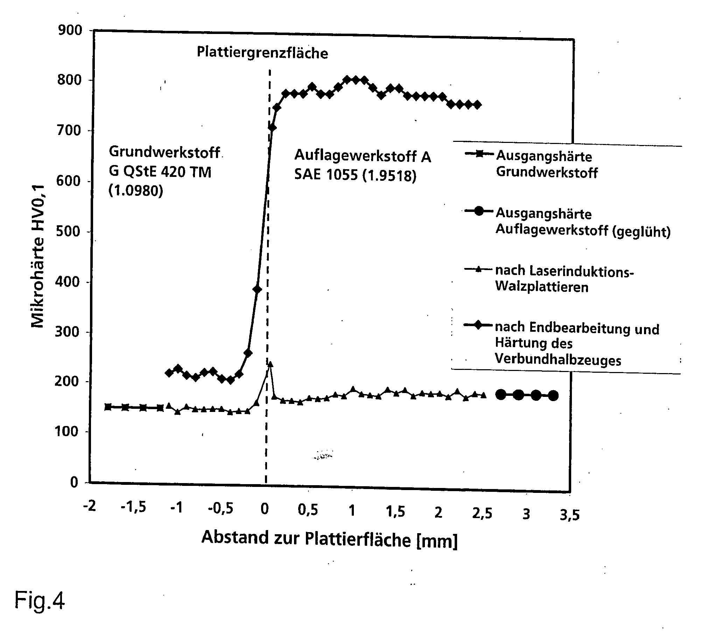

Als Ergebnis des Prozesses entsteht ein einseitig härtbares Bimetallband (siehe Fig. 3a) mit einer perfekt ausgebildeten Verbindungszone (siehe Fig. 3b). Die Grenzfläche weist eine fehlerfreie atomare Bindung ohne Poren, Bindefehler oder Anschmelzungen auf, wobei einzelne Körner über die Grenzfläche hinweg rekristallisieren. Beide Bänder sind vollständig in der festen Phase ohne das Auftreten eines aufgeschmolzenen Saumes gefügt worden. Beide Werkstoffe des plattierten Bandes P (4) liegen nach der langsamen Abkühlung an Luft im quasi normalisierten Zustand vor. In diesem Zustand ist das Band gut mechanisch oder fügetechnisch weiterverarbeitbar. Die gute und rissfreie Umformbarkeit des Bimetallbandes wird durch einen Verdrillversuch nachgewiesen (siehe Fig. 5). Weder nach dem Verdrillversuch noch nach einer Umbiegung mit einem Biegewinkel von 180° weist das Band Risse oder Einschnürungen auf. Für die gute mechanische Belastbarkeit und Umformbarkeit des Bandes ist neben der atomaren Verbindung die Vermeidung einer Gussstruktur, d. h. das Vermeiden des Überschreitens der Schmelztemperatur $T_S$ wie auch die geringe Härte in der Grenzfläche entscheidend. Fig. 4 zeigt den Härteverlauf quer zur plattierten Grenzfläche in verschiedenen Bearbeitungsstadien. Die Ausgangshärte im Grundwerkstoff G (1) beträgt 150 HV0,1 und die im Auflagewerkstoff A (2) 190 HV0,1. Nach dem Laserinduktionsbandplattieren wird an den Bandaußenseiten genau die Ausgangshärte erreicht, während in unmittelbarer Nähe der Plattierfläche (37) die Härte im Grundwerkstoff G (1) und im Auflagewerkstoff A (2) geringfügig um ca. 5 HV0,1 auf ca. 145 HV0,1 bzw. um ca. 20 HV auf ca. 170 HV0,1 abfällt. Bemerkenswert und Ursache für die gute Verformbarkeit des plattieren Bandes ist die Tatsache, dass auch in der Plattierzone (37) nur ein äußerst geringer Härteanstieg (ca. 240 HV0,1) zu verzeichnen ist. Nach dem Härten nimmt die hochkohlenstoffhaltige Seite des Bandes P (5) eine Härte von ca. 780 HV0,1 an, ohne dass es zu Rissen in der Plattierzone (37) oder zu einer Randentkohlung kommt (siehe Fig. 4 und Fig. 3c).

Gegenüber dem Stand der Technik werden in diesem Anwendungsbeispiel folgende spezifische Vorteile erreicht:

- erstmalige effektive technische Möglichkeit zum Warmwalzplattieren schmaler Bandprodukte und Halbzeuge aus Vergütungsstählen
- Erhöhung der Geschwindigkeit des Laserwalzplattierens gegenüber dem Stand der Technik (vgl. z. B. DE 19502140) um mindestens den Faktor 2
- deutliche Reduzierung der Investitionskosten durch einfachen Aufbau des Walzengerüstes um mindestens den Faktor 2 infolge der um den Faktor 2 bis 4 reduzierten Walzkräfte sowie Reduzierung der nötigen Laserleistung um den Faktor 1,5 bis 2,5
- gute Integrierbarkeit von weiteren Wärmebehandlungsschritten unter energetisch sehr vorteilhafter Nutzung der Restwärme aus dem Warmwalzplattieren
- Herstellbarkeit von Halbzeugen mit qualitativ neuen Funktionalitäten

Ausführungsbeispiel 2:

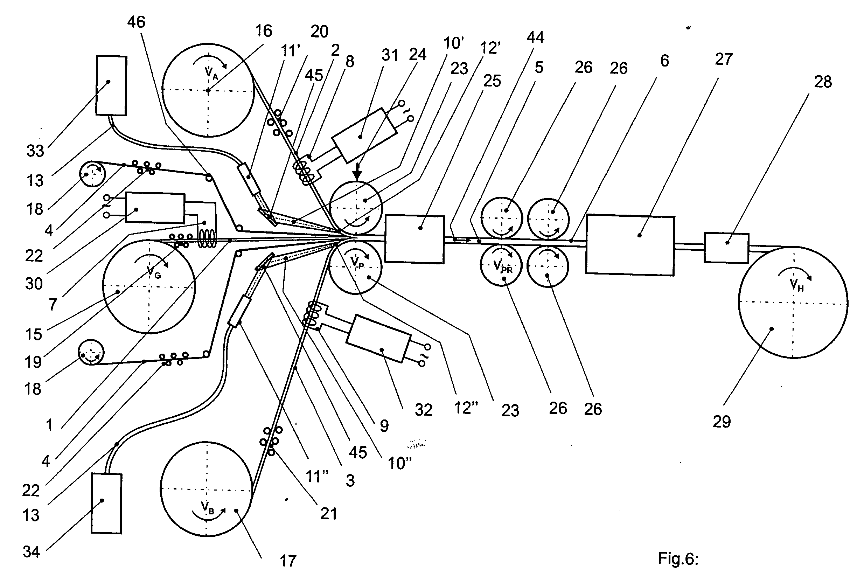

Das Ausführungsbeispiel 2 bezieht sich vorwiegend auf die Ansprüche 32 und 35 bis 37 und führt eine erfindungsgemäße Bandplattieranlage in einer sehr flexiblen Form aus (siehe Fig. 6). Auf der Anlage sollen ein aus Korrosionsschutzgründen doppelseitig plattiertes Band aus einer sehr schwer fehlerfrei fügbaren Werkstoffkombination warmwalzplattiert werden. Wegen der extremen metallurgischen Unverträglichkeit des Grundwerkstoffes G (1) mit den Bändern der Auflagewerkstoffe A (2) und B (3) wird zwischen Grundwerkstoff G (1) und Auflagewerkstoff A (2), B (3) je ein Zwischenlagewerkstoff C (4) eingeführt.

Die Anlage besteht aus den Abhaspelstationen (15), (16), (17) für den Grundwerkstoff A (2) und B (3). Für den Zwischenlagewerkstoff C (4) sind zwei identische kleinere Abhaspelstationen (18) vorgesehen. Über die entsprechenden Richtwalzensätze (19, 20, 21, 22) gelangt das Band über Umlenkrollen (46) zum Walzenpaar zum Warmwalzplattieren (23). Hinter dem Walzenpaar (23) ist eine Abkühlstrecke (25) angeordnet. Dahinter befindet sich ein Profilierwalzensatz (26), der entsprechend der Umformaufgabe mit einem oder mehreren Walzenstöcken ausgerüstet ist. Der Profilierwalzensatz (26) kann auch aus einem Rollformer bestehen, der das warmwalzplattierte Band P (5) zu einem Rohr umformt, das in einer nicht gezeichneten Rohrschweißanlage verschweißt werden kann. Daran schließt sich eine Wärmebehandlungsstrecke (27) an. Abschließend befinden sich alternativ eine Ablängeinrichtung für warmwalzplattierte Halbzeuge (28) oder eine Haspel zum Aufnehmen des warmwalzplattierten und eventuell umgeformten Halbzeuges P (5) bzw. H (6).

Zur induktiven Vorwärmung des Bandes aus dem Grundwerkstoff G (1), dem Auflagewerkstoff A (2) und B (3) sind drei Induktoren (7), (8) und (9) zwischen den Richtwalzensätzen (19), (20) bzw. (21) angeordnet. Die drei Induktoren (7, 8, 9) umfassen die Bänder (1, 2, 3) jeweils vollständig und werden von den Induktionsgeneratoren (30, 31, 32) gespeist. Die Induktionsgeneratoren haben eine Frequenz von 200 kHz. Die Laserenergie stellen zwei Faserlaser (33, 34) mit einer Leistung von je 4 kW zur Verfügung. Die Laserstrahlung wird durch zwei Lichtleitfasern (13) über zwei Strahlformungseinheiten (11', 11") auf die beiden Innenseiten der Bänder (39, 40) aus den Auflagewerkstoffen A (2) und B (3) fokussiert. Die Strahlformungseinheiten (11', 11") enthalten optische Mittel zur Erzeugung eines Linienfokus mit konstanter Intensität parallel zur Plattierfläche (37). Falls erforderlich, kann der Laserstrahl (10') bzw. (10") über Umlenkspiegel (45) auf die Bandinnenseiten (39, 40) der Auflagewerkstoffe A (2) und B (3) gerichtet werden.

Zum Start des Verfahrens werden alle Abhaspelstationen (15, 16, 17, 18), das Walzenpaar zum Warmwalzplattieren (23), der Profilwalzensatz (26) und die Walze der Abhaspelstation (29) in Banddurchlaufrichtung (44) in die Umdrehungsgeschwindigkeiten $v_A = v_B = v_G < v_P \leq v_{PR} = v_H$ versetzt. Gleichzeitig werden die Induktoren (7, 8, 9) mit einer ausgewählten Stromstärke beaufschlagt. Über die Temperaturmesseinrichtungen (in Fig. 6 nicht eingezeichnet) (41, 42, 43) wird die Stromstärke auf die Solltemperaturen $T_G^1$, $T_A^1$, $T_B^1$ geregelt. Kurz bevor die Bänder der Auflagewerkstoffe A (2), B (3) die vorgesehenen Einwirkzonen (12', 12") der Laserstrahlen (10', 10") erreicht haben, wird der Laser (33, 34) eingeschaltet. Jetzt wird auch der Walzendruck des Walzenpaares zum Warmwalzplattieren (23) durch die hydraulische Walzkrafteinstellung (24) von einem geringen Anfangswert, der zur störungslosen Bandführung nötig ist, aber keinerlei plastische Deformation in den Bändern G (1), A (2), B (3) bzw. C (4) erzeugt, auf den Sollwert erhöht.

In der speziellen Ausbildung der Verwendung von Zwischenlagenbändern C (4) werden die Laserstrahlen (10', 10") jeweils asymmetrisch auf die Bänder A (2) und B (3) bzw. den Umformwulst (36) der Umformzone (35) gerichtet. Die beiden Bänder des Zwischenlagewerkstoffes C (4) haben nur eine geringe Dicke, im gewählten Fall 200 μm. Dadurch können sie allein durch die Reflexion der Laserstrahlen (10') und (10") von deren Einwirkzonen (12') und (12") ausreichend erwärmt werden. Der Grundwerkstoff G (1) wird allein durch den Induktor (7) erwärmt. Um eine gute Plattierfähigkeit mit dem Band des Zwischenlagewerkstoffes C (4) zu erzielen, wird die Temperatur $T_G^1$ an der Banddurchlaufposition P1 soweit erhöht eingestellt, dass die Temperatur $T_G^4$ an der Banddurchlaufposition P4 ausreichend hoch ist, um ein Plattierverbund mit dem erwärmten Zwischenlagenband C (4) einzugehen.

Ausführunesgsbeispiel 3:

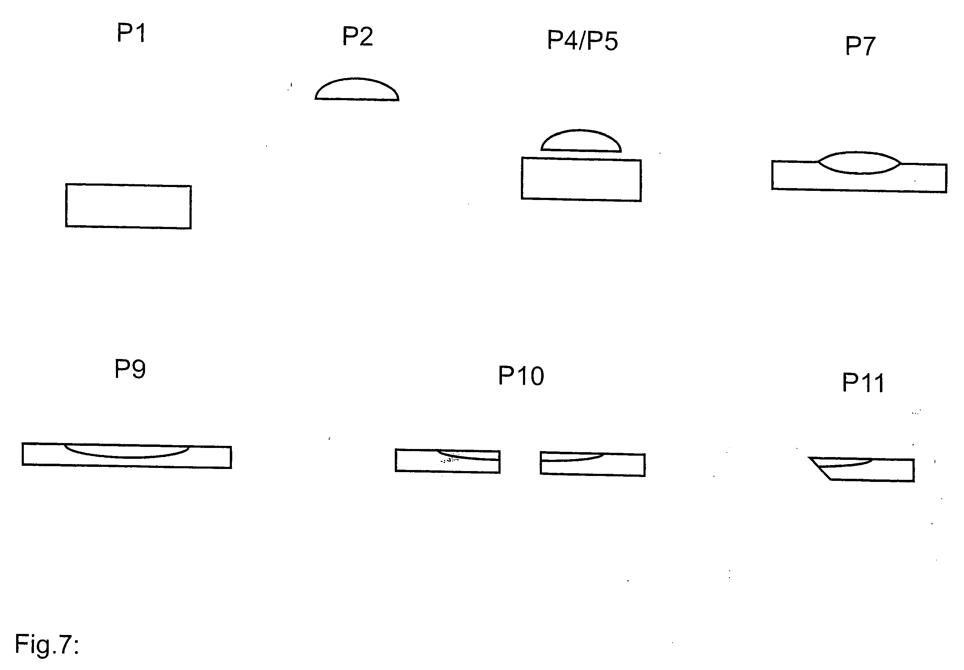

Ausführungsbeispiel 3 stellt eine mögliche Prozessabfolge zur Nutzung des erfindungsgemäßen Verfahrens zur kostengünstigen Herstellung von sehr standfesten Industriemessern dar (siehe Fig. 7). Der Werkstoff für das Band des Grundwerkstoffes G (1) besteht aus einem höherfesten schweißbaren Baustahl, wie z. B. S690, S960 oder S1100 (P1). Für den Werkstoff des Auflagewerkstoffes A (2) können Kaltarbeitsstähle, hochlegierte Werkzeugstähle, Schnellarbeitsstähle oder auch Stellite gewählt werden (P2). Günstig erweist es sich, als Querschnitt für das Band A (2) einen flachen Kreisabschnitt zu wählen. Beide Bänder werden induktiv auf eine werkstoffspezifische Temperatur $T_G^1$ bzw. $T_A^2$ erwärmt. Die Breite der Lasereinwirkungszone entspricht der Breite des Auflagebandes A (2). Im Gegensatz zum Ausführungsbeispiel 1 ist hier die obere Walze des Walzenpaares (23) profiliert. Die Profiliertiefe beträgt etwa die Hälfte der Banddicke des Auflagematerials A (2). Durch diese Form wird das Auflagematerial A (2) linsenförmig in das Band des Grundwerkstoffes G (1) eingepresst (P7). Diese sanfte Form der Einpressung verringert die Gefahr von Bindefehlern an den Bandkanten des Auflagewerkstoffes A(2). Im Profilierwalzensatz (26) findet bei ausreichend hohen Temperaturen die völlige Einwalzung des Auflagewerkstoffes A (2) in den Grundwerkstoff G (1); (P9) statt. Nach dem Erkalten wird das umgeformte Halbzeug H (6) längs getrennt (P10) und anschließend die Messerfläche angeschliffen (P11)

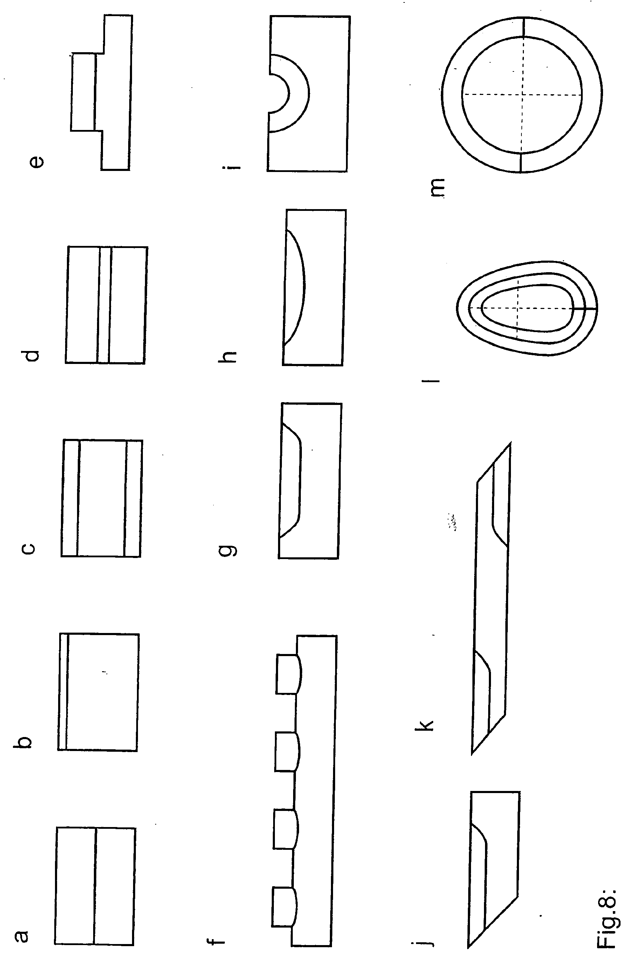

Mögliche Querschnittsformen für die laserinduktionsplattierten Halbzeuge sind ohne Beschränkung der Allgemeinheit in Fig. 8a bis 8m dargestellt. Ein bevorzugtes Anwendungsgebiet sind insbesondere Halbzeuge für wälzverschleißbeanspruchte Bauteile wie sie in Fig. 8a, e, g, h, i, l dargestellt sind. Das Halbzeug nach Kontur 8 e eignet sich z. B. für Maschinenführungsleisten, die Halbzeuge nach 8 g, h, i für Laufbahnen für Zylinderrollen- bzw. Kugellager. In diesen Fällen kann für den Auflagewerkstoff A (2) vorzugsweise der Kugellagerstahl 100Cr6 verwendet werden. Ein Halbzeug nach Fig. 8b oder 8c ist dagegen gut bei besonderer korrosiver Beanspruchung einsetzbar.

Ohne Verletzung des Erfindungsgedankens kann das Band des Grundwerkstoffes bis auf die Plattierfläche schon die Endgeometrie des späteren Bauteiles besitzen. Dadurch kann das Laserinduktionswalzplattieren z. B. bei der Fertigung von Führungsbahnen oder Verschleißleisten verwendet werden, um solche Bauteile sehr endkonturnah zu fügen.

Ausführungsbeispiel 4:

Elektrische Leiter für Hoch-, Höchst- oder Impulsstromanwendungen müssen gleichzeitig zwei gegensätzlichen Anforderungen genügen - zum Einen höchster elektrischer Leitfähigkeit und zum Anderen einer sehr hohen mechanischen Belastbarkeit und Strukturstabilität. Diese lassen sich mit einem monolitischen Werkstoff nur unzureichend erfüllen. Darüber hinaus muss die Ohm'sche Verlustwärme möglichst effektiv abgeführt werden. Zusätzliche separate Kühlleitungen verringern jedoch die elektrische Stromdichte, erhöhen den Bauaufwand und machen das Bauteil störanfälliger.

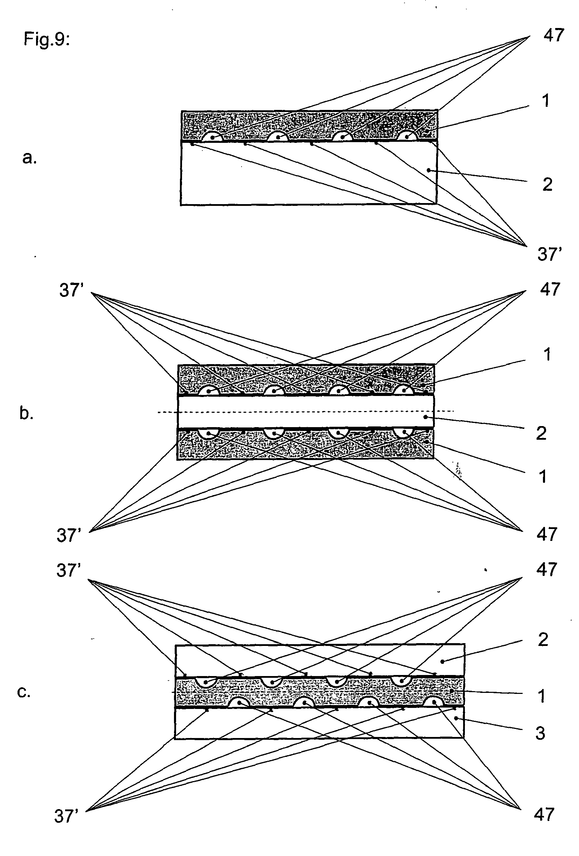

Diesen Anforderungen kann sehr gut mit einer spezifischen Weiterbildung des Erfindungsgedankens entsprochen werden. Dazu wird, wie in den Fig. 9a, b, c gezeigt, ein laserinduktionswalzplattiertes Verbundhalbzeug mit integrierten Kühlkanälen vorgeschlagen. In seiner einfachsten Ausführungsform (siehe Fig. 9a) besteht es aus einem rechteckförmigen Profil aus sauerstofffreiem Kupfer höchster elektrischer Leitfähigkeit, das mittels Laserinduktionswalzplattieren mit einem ebenfalls rechteckigen Profil gleicher Breite aber geringerer Dicke aus einem Maraging-Stahl stoffschlüssig verbunden ist. Das Band des Maraging-Stahls, das als Grundwerkstoff A (1) dient, enthält auf der dem Auflagewerkstoff B(2) zugewandten Seite längs des Bandes A (1) verlaufende Kühlkanäle (47). Die Plattierzone (37) ist aus einzelnen Teilzonen (37') aufgebaut. Für den Fall, dass die Summe der Breiten der einzelnen Teilzonen (37') deutlich größer ist als die Summe der Breiten der Kühlkanäle (47), ist es vorteilhaft, alle Teilzonen (37') gleichzeitig mit einem einzigen, entsprechend breit geformten Laserstrahl (10) zu plattieren. Im entgegengesetzten Fall ist es günstiger, mit mehreren Teilstrahlen zu arbeiten. Für die Durchführung des Verfahrens wird die induktive Energie des Induktors (7) für die Erwärmung des Grundwerkstoffes G (1) gegenüber der des Induktors (8) für den Auflagewerkstoff A (2) so gewählt, dass die sich einstellende Temperatur $T_G^4$ im Grundwerkstoff G (1) in der Position P4 deutlich höher ist, als die entsprechende Temperatur $T_A^5$ im Auflagewerkstoff A(2). Vorteilhafterweise wird die Temperatur $T_G^4$ so gewählt, dass sie oberhalb der Austenitisierungstemperatur des verwendeten Maraging-Stahles liegt. Nach dem Durchlaufen des Walzenpaares (23) wird das plattierte Band P (5) in einer Kühleinrichtung (25) abgeschreckt. Anschließend wird das plattierte Band einer Auslagerungs-Wärmebehandlung zur Martensit-Aushärtung des Grundwerkstoffes G (1) unterzogen. Dadurch erhält das Verbundhalbzeug eine deutlich höhere Festigkeit.

Vorteilhaft wirkt sich aus, dass beim erfindungsgemäßen Verfahren die Mindestumformgrade zum Erreichen einer stoffschlüssigen Plattierverbindung sehr klein gewählt werden können. Dadurch werden die Stege des Auflagewerkstoffes A(2) während des Eingriffes des Walzenpaares (23) nur geringförmig verformt. Dadurch und durch eine geringere Temperatur $T_A^5$ im Band des Auflagewerkstoffes A (2) gegenüber der Temperatur $T_G^4$ des Grundwerkstoffes G (1) ist gewährleistet, dass trotz sehr viel geringerer Fließspannungen des Kupfers gegenüber dem Maraging-Stahl der Querschnitt der Kühlkanäle (47) durch das Warmwalzplattieren nur geringfügig verringert wird.

Ein so warmwalzplattiertes Halbzeug weist verbesserte Eigenschaftskombinationen auf. Darüber hinaus wird durch die verbesserte integrierte Kühlwirkung gleichzeitig eine erhöhte Strombelastbarkeit erreicht.

Alternative geometrische Ausführungsvarianten sind in den Fig. 9b und 9c gezeigt. Diese Ausführungsform eignet sich für mechanisch besonders hoch belastete Anwendungen. Wenn über die äußeren Flächen der Strom über einen Schleifkontakt abgenommen werden soll, kann als Auflagewerkstoff A (2) und B (3) auch eine höchstfeste ausscheidungshärtbare Kupferlegierung, wie z. B. eine Kupfer-Beryllium-Bronze oder eine Kupfer-Chrom-Legierung verwendet werden. Analog zu der Ausführung mit einem Maraging-Stahl schließt sich nach dem Warmwalzplattieren, dem Lösungsglühen und Abschrecken eine Wärmebehandlung zur Ausscheidungshärtung an.

Die Ausführungsform nach 9 c eignet sich insbesondere für solche Anwendungen, in denen ein niedrigerer Übergangswiderstand zu anderen Bauteilen erforderlich ist, wie z. B. Stromführungsschienen.

Ausführungsbeispiel 5:

Auch in speziellen Wärmetauschern ist die Gewährleistung der mechanischen Stabilität eine konstruktive Herausforderung. Dieser kann durch eine Funktionstrennung entsprochen werden, indem die mechanische bzw. Stützfunktion durch einen hoch- oder höchstfesten Stützwerkstoff (z. B. hochfester rostfreier Stahl) und die Wärmetauscherfunktion durch einen sehr dünnwandigen und sehr gut wärmeleitfähigen Werkstoff wie z. B. Aluminium oder Kupfer realisiert werden. Zur Vergrößerung der Wärmetauscheroberfläche kann dieser sehr profiliert ausgeführt werden.

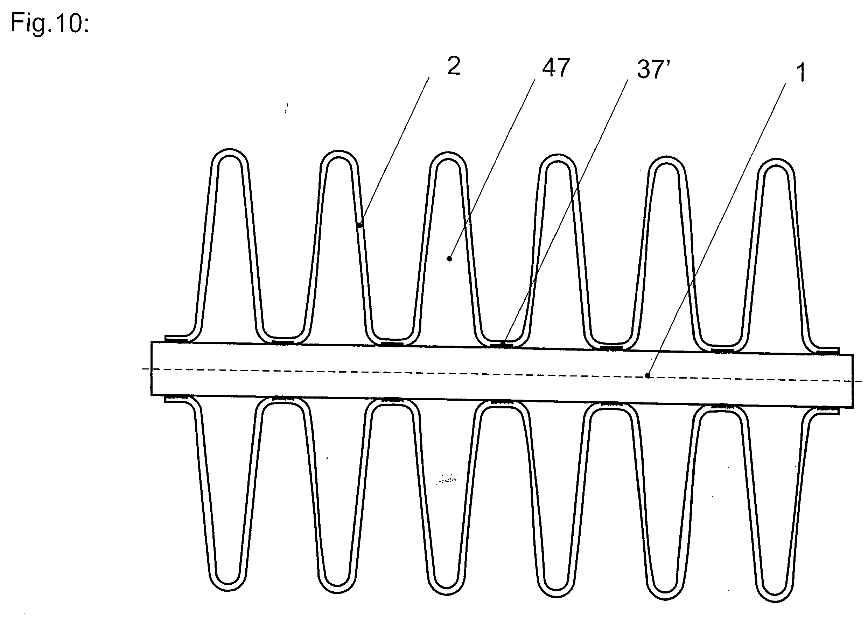

Ein mögliches Halbzeug ist in Fig. 10 gezeigt. Der Grundwerkstoff G (1) besteht aus einem martensitischen Chromstahl X20Cr13. Der Wärmetauscherwerkstoff besteht aus Kupfer und wird als Auflagewerkstoff A (2) und B (3) als profiliertes Blech laserinduktionswalzplattiert. Das Warmwalzenpaar (23) wird deshalb aus zwei Profilwalzen gebildet, die nur im Bereich der Umformzonen (35) Kontakt mit dem Auflagewerkstoff A (2) bzw. B (3) haben. Die Plattierfläche (37) besteht wieder aus mehreren, getrennt angeordneten Teilzonen (37'). Als Laser (33, 34) für die Laserstrahlen (10', 10") werden in diesem Fall ein oder mehrere Faserlaser verwendet. Der Laserstrahl wird dazu über mehrere Fasern mehreren Strahlformungseinheiten (11', 11") zugeführt, die die Laserstrahlen auf die Teilzonen (37') der Plattierzone (37) aufteilen.

Ohne Verletzung des Erfindungsgedankens kann das profilierte Blech des Auflagewerkstoffes A (2) und B (3) auch in schon abgelängten Stücken vorliegen. In diesem Fall werden die Abhaspelstationen (15, 16, 17) durch drei Zuführstationen und die Aufhaspelstation (29) durch eine Ablagestation ersetzt.

**Zusammenstellung der verwendeten Bezugszeichen aus den Fig. 1 bis 9:**

| | |
|---|---|
| 1 | Band des Grundwerkstoffes G |
| 2 | Band des Auflagewerkstoffes A |
| 3 | Band des Auflagewerkstoffes B |
| 4 | Band des Zwischenlagewerkstoffes C |
| 5 | Warmwalzplattiertes Band P |
| 6 | Umgeformtes Halbzeug H |
| 7 | Induktor zur Erwärmung des Grundwerkstoffes G |
| 8 | Induktor zur Erwärmung des Auflagewerkstoffes A |
| 9 | Induktor zur Erwärmung des Auflagewerkstoffes B |
| 10 | Laserstrahl |
| 10' | Laserstrahl zur Erwärmung des Auflagewerkstoffes A bzw. der oberen Seite des Grundwerkstoffes G |
| 10" | Laserstrahl zur Erwärmung des Auflagewerkstoffes B bzw. der unteren Seite des Grundwerkstoffes G |
| 11 | Strahlformungseinheit des Laserstrahles 10 |
| 11' | Strahlformungseinheit des Laserstrahles 10' |
| 11" | Strahlformungseinheit des Laserstrahles 10" |
| 12 | Einwirkzone des Laserstrahles 10 |
| 12' | Einwirkzone des Laserstrahles 10' |
| 12" | Einwirkzone des Laserstrahles 10" |
| 13 | Lichtleitfaser für Laserstrahl 10 bzw. 10' |
| 14 | Fokussieroptik für Laserstrahl 10 |
| 15 | Zuführ- bzw. Abhaspelstation bzw. Coil des Grundwerkstoffes G (1) |
| 16 | Zuführ- bzw. Abhaspelstation bzw. Coil des Auflagewerkstoffes A(2) |
| 17 | Zuführ- bzw. Abhaspelstation bzw. Coil des Auflagewerkstoffes B (3) |
| 18 | Zuführ- bzw. Abhaspelstation bzw. Coil des Zwischenlagewerkstoffes C (4) |
| 19 | Richtwalzensatz für Band des Grundwerkstoffes G (1) |
| 20 | Richtwalzensatz für Band des Auflagewerkstoffes A (2) |
| 21 | Richtwalzensatz für Band des Auflagewerkstoffes B (3) |
| 22 | Richtwalzensatz für Band des Zwischenlagewerkstoffes C (4) |
| 23 | Walzenpaar zum Warmwalzplattieren |
| 24 | Hydraulische Walzkrafteinstellung |
| 25 | Kühleinrichtung für warmwalzplattiertes Band, Abkühlstrecke |
| 26 | Profilierwalzensatz |
| 27 | Wärmebehandlungsofen, Wärmebehandlungsstrecke |
| 28 | Ablängeinrichtung für warmwalzplattierte Halbzeuge |
| 29 | Haspel zum Aufnehmen des warmwalzplattierten Bandes P (5), Ablagestation |
| 30 | Induktionsgenerator für Induktor 7 |
| 31 | Induktionsgenerator für Induktor 8 |

(fortgesetzt)

| 32 | Induktionsgenerator für Induktor 9 |
|----|----|
| 33 | Laser für Laserstrahl 10' |
| 34 | Laser für Laserstrahl 10" |
| 35 | Umformzone |
| 36 | Umformwulst |
| 37 | Plattierfläche, Plattierzone, Plattierebene |
| 37' | Teilzone der Plattierfläche, bzw. Plattierzone oder Plattierebene |
| 38 | Bandinnenseite des Grundwerkstoffes G (2) |
| 39 | Bandinnenseite des Auflagewerkstoffes A (3) |
| 40 | Bandinnenseite des Auflagewerkstoffes B (4) |
| 41 | Temperaturmesseinrichtung Induktionserwärmung (7) |
| 42 | Temperaturmesseinrichtung Induktionserwärmung (8) |
| 43 | Temperaturmesseinrichtung Induktionserwärmung (9) |
| 44 | Banddurchlaufrichtung |
| 45 | Umlenkspiegel für Laserstrahl |
| 46 | Umlenkrolle |
| 47 | Kühlkanal |

**Zusammenstellung der verwendeten Abkürzungen**

| F | hydraulische Walzkraft |
|----|----|
| P1 | Position 1 im Bandlauf des Bandes G (1) nach der induktiven und vor der Laserenergieeinwirkung |
| P2 | Position 2 im Bandlauf des Bandes A (2) nach der induktiven und vor der Laserenergieeinwirkung |
| P3 | Position 3 im Bandlauf des Bandes B (3) nach der induktiven und vor der Laserenergieeinwirkung |
| P4 | Position 4 im Bandlauf des Bandes G (1) nach der Lasereinwirkung |
| P5 | Position 5 im Bandlauf des Bandes A (2) nach der Lasereinwirkung |
| P6 | Position 6 im Bandlauf des Bandes B (3) nach der Lasereinwirkung |
| P7 | Position 7 im Bandlauf während des Warmwalzplattierens durch das Walzenpaar (23) |
| P8 | Position 8 im Bandlauf des plattierten Bandes |
| P9 | Position 9 im Bandlauf nach dem Durchlaufen des Profilierwalzensatzes (26) |
| P10 | Position 10 nach dem mechanischen Trennen des Halbzeuges |
| P11 | Position 11 nach mechanischer Fertigbearbeitung des Halbzeuges |
| $T_L$ | Durch Laser erzeugtes Temperaturfeld |
| $T_i$ | Durch Induktion erzeugtes Temperaturfeld |
| $T_{Gn}$ | Temperatur im Band G (1) an der Position n |
| $\Delta T_{ges.}$ | gesamter Temperaturanstieg |
| $\Delta T_i$ | Durch induktive Erwärmung erzeugter Temperaturanstieg |
| $\Delta T_L$ | Durch Lasereinwirkung erzeugter Temperaturanstieg |

(fortgesetzt)

| | |
|---|---|
| $T_G^n$ | Temperatur im Grundwerkstoff G (1) in der Position n (n = 1 oder 4) |
| $T_A^n$ | Temperatur im Auflagewerkstoff A (2) in der Position n (n = 2 oder 5) |
| $T_B^n$ | Temperatur im Auflagewerkstoff B (3) in der Position n (n = 3 oder 6) |
| $T_P^7$ | Temperatur im warmwalzplattierten Band an der Position 7 |
| $T_S$ | Schmelztemperatur |
| $T_S^{G,A,B}$ | Schmelztemperaturen der Bänder G (1), A (2) oder B (3) |
| $T_{GL}^4$ | Temperatur an Innenseite (38) des Bandes aus dem Grundwerkstoff G (1) nach Lasereinwirkung an Position 4 |
| $T_{AL}^5$ | Temperatur an der Innenseite (39) des Bandes aus dem Auflagewerkstoff A (2) nach Lasereinwirkung |
| $T_{BL}^6$ | Temperatur an der Innenseite (40) des Bandes aus dem Auflagewerkstoff B (3) nach Lasereinwirkung |
| $T_{GR}^7$ | Temperatur des walzplattierten Bandes an der Walzenseite des Bandes aus dem Grundwerkstoff G (1) |
| $T_{AR}^7$ | Temperatur des walzplattierten Bandes an der Walzenseite des Bandes aus dem Auflagewerkstoff A (2) |
| $T_{An}$ | Temperatur im Band A (2) an der Position n |
| $T_{Bn}$ | Temperatur im Band B (3) an der Position n |
| $v_A$ | Einlaufgeschwindigkeit Band Auflagewerkstoff A (2) |
| $v_B$ | Einlaufgeschwindigkeit Band Auflagewerkstoff B (3) |
| $v_G$ | Einlaufgeschwindigkeit Band Grundwerkstoff G (1) |
| $v_H$ | Endwalzgeschwindigkeit des Halbzeuges H (6) bzw. Aufhaspelgeschwindigkeit des walzplattierten Bandes P (5) |
| $v_p$ | Walzplattiergeschwindigkeit |
| $v_{PR}$ | Walzprofiliergeschwindigkeit |

## Patentansprüche

1. Verfahren zum Herstellen von metallischen Werkstoffverbunden und Verbund-Halbzeugen durch Warmwalzplattieren eines Bandes aus dem Grundwerkstoff mit einem Band des Auflagewerkstoffes oder den Bändern der Auflagewerkstoffe mittels Laser- und induktiver Unterstützung, **dadurch gekennzeichnet, dass**

    a. eine inhomogene Kurzzeiterwärmung von mindestens einem der Bänder (1, 2) oder (3) infolge eines gleichzeitigen Energieeintrages durch elektromagnetische Induktion und Laserbestrahlung stattfindet, wobei der induktive Anteil am Gesamtenergieeintrag mindestens 65 % beträgt,
    b. die induktive Erwärmung in der Banddurchlaufrichtung (44) vor der Laserbestrahlung erfolgt,
    c. die Laserbestrahlung direkt auf oder unmittelbar vor die Umformzone (35) der Bandinnenseiten (38, 39) oder (40) unmittelbar vor den Walzeneingriff gerichtet ist und die gesamte Breite der Umformzone (35) mit einer konstanten Intensität und mindestens die gesamte Höhe der Umformzone (35) umfasst,
    d. die laserinduzierten Temperaturfelder $T_L$ mit den induktiv erzeugten Temperaturfeldern $T_i$ dergestalt überlagert werden, dass am Ort der Umformzone (35) ein Temperaturgradient senkrecht zur Walzebene herrscht und die Maximaltemperatur in der Plattierebene (37) unterhalb der Schmelztemperatur $T_S$ des Bandes (1, 2) oder (3) mit der niedrigsten Schmelztemperatur $T_S$ liegt,
    e. ein Warmwalzen der mit einem Temperaturgradienten versehenen Bänder (1,2) und / oder (3) in einem Stich erfolgt,

f. und ein Warmwalzgrad zwischen 1 und 70 % eingestellt wird.

2. Verfahren nach Anspruch 1 , **dadurch gekennzeichnet, dass** das Ausmaß der zum Warmwalzplattieren nötigen Relativverformung zwischen den Bändern (1) und (2) bzw. (2) und (3) und die Gesamtverformung der Bänder (1, 2, 3) durch die Höhe und das Verhältnis der induktiv erzeugten Temperaturen $T_i$, die Höhe und Ausdehnung des laserinduzierten Temperaturfeldes $T_L$, die Geometrie der Bänder, die Walzengeometrie und die Walzenzustellung eingestellt wird.

3. Verfahren nach Anspruch 2, **dadurch gekennzeichnet, dass** das Warmwalzplattieren mit Walzen erfolgt, von denen mindestens eine profiliert ist und durch das Warmwalzen gleichzeitig die Endformgebung des Halbzeuges erfolgt.

4. Verfahren nach Anspruch 2, **dadurch gekennzeichnet, dass** mit dem Warmwalzplattieren nur eine Zwischenform des plattierten Bandes erzeugt wird und das Walzen des Halbzeuges in nachfolgenden Profilierwalzen (26) erfolgt.

5. Verfahren nach mindestens einem der vorhergehenden Ansprüche, **dadurch gekennzeichnet, dass** für Bänder (1, 2) oder (3) aus thermisch unempfindlichen Werkstoffen eine durchgreifende induktive Erwärmung der Bänder (1, 2) oder (3) erfolgt und der oder die Induktoren (7, 8, 9) die entsprechenden Bänder (1, 2) oder (3) komplett umfassen und der Abstand zwischen der Umformzone (35) und den Induktoren (7, 8, 9) so groß gewählt wird, dass sich der Temperaturgradient der induktiven Erwärmung in das Bandmaterial hinein weitgehend abgebaut hat.

6. Verfahren nach Anspruch 5, **dadurch gekennzeichnet, dass** für die Höhen der induktiv und mittels Laser erzeugten Temperaturanstiege $\Delta T_i$ bzw. $\Delta T_L$ an den Bandinnenseiten (38, 39, 40) in der Umformzone (35) gilt

$$0{,}30 * T_S \leq \Delta T_i \leq 0{,}8 * T_S \qquad\qquad \text{(I)}$$

$$0{,}05 * T_S \leq \Delta T_L \leq 0{,}65 * T_S \qquad\qquad \text{(II)}$$

$$\Delta T_{ges.} = \Delta T_i + \Delta T_L \leq 0{,}98 * T_S \qquad\qquad \text{(III)}$$

mit $T_S$ als der Schmelztemperatur des Bandes (1, 2) oder (3) mit der niedrigsten Schmelztemperatur.

7. Verfahren nach mindestens einem der vorhergehenden Ansprüche, **dadurch gekennzeichnet, dass** für Bänder (1, 2) oder (3) aus thermisch empfindlichen Werkstoffen nur eine induktive Erwärmung der Bandinnenseiten (38, 39 bzw. 40) mittels Flachinduktor vorgenommen wird und die Induktoren (7, 8 bzw. 9) unmittelbar vor der Lasereinwirkzone (12) angeordnet werden, wobei vorteilhafterweise das warmwalzplattierte Band (5) unmittelbar nach Verlassen des Walzenpaares (23) in einer Kühlstrecke (25) schnell abgekühlt wird.

8. Verfahren nach mindestens einem der vorhergehenden Ansprüche, **dadurch gekennzeichnet, dass** ein Band eines Grundwerkstoffes G (1), ein Band mit dem Auflagewerkstoff A (2) und ein Band mit dem Auflagewerkstoff B (3) verwendet werden, so dass ein beidseitig plattiertes Halbzeug entsteht.

9. Verfahren nach mindestens einem der vorhergehenden Ansprüche, **dadurch gekennzeichnet, dass** ein Band eines Grundwerkstoffes G (1) und nur ein Band mit dem Auflagewerkstoff A (2) verwendet wird, so dass ein einseitig plattiertes Halbzeug entsteht.

10. Verfahren nach Anspruch 9, **dadurch gekennzeichnet, dass** der Grundwerkstoff G (1) ein Baustahl ist und der Auflagewerkstoff A (2) ein Vergütungsstahl.

11. Verfahren nach mindestens einem der vorhergehenden Ansprüche, **dadurch gekennzeichnet, dass** die Erwärmung durch die Induktion und die Lasereinwirkung, der Transport des erwärmten Bandes und das Walzplattieren und gegebenenfalls das Walzprofilieren unter Schutzgas stattfinden oder bei oxidierenden Bändern unter einer reduzierenden Atmosphäre erfolgen.

**12.** Verfahren nach den Ansprüchen 1, 6, 9 und 10, **dadurch gekennzeichnet, dass** die Höhe der induktiv erzeugten Temperatur $\Delta T_i$ im Bereich

$$500\ °C \leq \Delta T_i \leq 900\ °C \qquad (IV)$$

$$(entspricht\ 0{,}35 * T_S \leq \Delta T_i \leq 0{,}63 * T_S) \qquad (V)$$

und die Höhe der mittels Laser erzeugten Temperatur $\Delta T_L$ im Bereich

$$300\ K \leq \Delta T_L \leq 900\ K \qquad (VI)$$

$$(entspricht\ 0{,}21 * T_S \leq \Delta T_L \leq 0{,}63 * T_S) \qquad (VII)$$

liegt und zusätzlich gilt

$$0{,}84 * T_S \leq \Delta T_i + \Delta T_L \leq 0{,}98 * T_S \qquad (VIII)$$

**13.** Verfahren nach den Ansprüchen 1, 6, 9, 10 und 12, **dadurch gekennzeichnet, dass** die Abkühlgeschwindigkeit des walzplattierten Bandes (5) durch Durchlaufen einer Abkühlstrecke (25) so eingestellt wird, dass ein normalisiertes Gefüge im Bereich des Auflagewerkstoffes A (2) entsteht.

**14.** Verfahren nach den Ansprüchen 1, 5, 9, 10 und 12, **dadurch gekennzeichnet, dass** der Querschnitt und die Breite des Bandes des Grundwerkstoffes G (1) deutlich größer ist als der Querschnitt und die Breite des Bandes des Auflagewerkstoffes A (2) und das warmwalzplattierte Band P (5) unter Nutzung der induktiv und durch Lasereinwirkung erzeugten Temperatur mittels der Profilierwalzen (26) zu einem Halbzeug H (6) dergestalt umgeformt wird, dass der härtbare Auflagewerkstoff A (2) vollständig in die Geometrie des Halbzeuges eingebettet ist.

**15.** Verfahren nach den Ansprüchen 1, 6, 9, 10, 12 und 14, **dadurch gekennzeichnet, dass** der härtbare Auflagewerkstoff A (2) aus einem Kugellagerwerkstoff besteht und/oder dass die Oberflächen des Bereiches des härtbaren Auflagewerkstoffes A (2) so profiliert werden, dass sie als Laufbahn für Zylinder oder Kugeln eines integrierten Wälzlagers dienen können.

**16.** Verfahren nach mindestens einem der vorhergehenden Ansprüche, **dadurch gekennzeichnet, dass** für Werkstoffpaarungen zwischen Grundwerkstoff G (1) und den Bändern der Auflagewerkstoffe A(2) bzw. B (3), bei denen eine extrem starke Tendenz zur Bildung von spröden intermetallischen Ausscheidungen besteht, zwischen dem Band des Grundwerkstoffes G (1) und dem Band des Auflagenwerkstoffes A(2) bzw. dem Band des Grundwerkstoffes G (1) und dem Band des Auflagenwerkstoffes B (3) ein dünnes Band aus einem Zwischenlagewerkstoff C (4) eingeführt wird, der so gewählt ist, dass er weder mit dem Grundwerkstoff G (1) noch mit den Auflagewerkstoffen A (2) bzw. B(3) schädliche intermetallische Phasen bildet und eine höhere Schmelztemperatur als die Bandwerkstoffe G (1), A (2) bzw. B (3) aufweist, indirekt über den Kontakt zum Band des Grundwerkstoffes G (1) oder den reflektierten Anteil des Laserstrahles (10, 10', 10") erwärmt wird und durch das Walzenpaar (23) mit walzplattiert wird.

**17.** Verfahren nach mindestens einem der vorhergehenden Ansprüche, **dadurch gekennzeichnet, dass** als Grundwerkstoff G (1) ein langgestrecktes, schon fertig oder nahezu fertig bearbeitetes Bauteil verwendet wird, auf dessen verschleißbeanspruchten Teilbereichen der Oberfläche ein Auflagewerkstoff A (2) aufplattiert wird.

**18.** Verfahren nach mindestens einem der vorhergehenden Ansprüche, **dadurch gekennzeichnet, dass** ein Schichtverbundwerkstoff dergestalt hergestellt wird, dass das schon gefügte warmwalzplattierte Band P5 in einem erneuten Durchlauf sowohl als neuer Grundwerkstoff G (1) als auch als Auflagewerkstoff A (2) oder B (3) verwendet und einem erneuten gleichartigen Warmwalzplattierprozess unterzogen wird, wobei vorteilhafterweise der Warmwalzgrad bei jedem Durchlauf 50 % betragen kann.

19. Verfahren nach mindestens einem der vorhergehenden Ansprüche , **dadurch gekennzeichnet, dass** die Innenseite des Bandes aus dem Grundwerkstoff G (1) und / oder des Auflagewerkstoffes A (2) bzw. B (3) im Ausgangszustand längs verlaufende Rillen oder Kanäle aufweist und der Warmwalzgrad so eingestellt wird, dass die Rillen bzw. Kanäle während des Umformens mit verringertem Querschnitt erhalten bleiben.

20. Verfahren nach mindestens einem der vorhergehenden Ansprüche, **dadurch gekennzeichnet, dass** als Band des Grundwerkstoffes G (1) und / oder des Auflagewerkstoffes A (2) bzw. B (3) ein profiliertes Blech oder ein stranggepresstes Halbzeug mit einer auf den Anwendungsfall bezogenen Querschnittsform dient.

21. Verfahren nach einem der vorhergehenden Ansprüche, **dadurch gekennzeichnet, dass** die Plattierfläche (30) in mehrere Teilflächen (37') aufgeteilt wird.

22. Verfahren nach Anspruch 21, **dadurch gekennzeichnet, dass** die Geometrie des Bandes des Auflagewerkstoffes A (2) bzw. B (3) und des Bandes des Grundwerkstoffes G (1) so gewählt werden, dass sie nach dem Warmwalzplattieren der getrennten Teilzonen (37') ein im Verhältnis zum Querschnitt der Bänder A (2), B (3) und G (1) großen Hohlraum einschließen.

23. Vorrichtung zum Herstellen von metallischen Werkstoffverbunden und Verbundhalbzeugen durch Warmwalzplattieren mittels Laserunterstützung nach einem oder mehreren Verfahren, wie sie in einem oder mehreren der Ansprüche von 1 bis 22 beschrieben sind, **dadurch gekennzeichnet, dass** sie aus

  • zwei bzw. drei induktiven Erwärmungsstationen bestehend aus zwei bzw. drei Induktoren (7, 8, 9) und dazugehörigen zwei bzw. drei Induktionsgeneratoren (30, 31, 32);
  • einem oder zwei Lasern (33, 34) mit einer oder zwei Strahlformungseinheiten (11, 11', 11");
  • einem Walzenpaar (23) zum Walzplattieren, wobei mindestens eine Walze des Walzenpaares (23) eine profilierte Walze darstellt und/oder dass sich nach dem Walzenpaar (23) zum Walzplattierren ein Satz von Profilierwalzen (26) befindet;
  • zwei oder drei Zuführ- oder Abhaspelstationen (15, 16, 17) für die Bänder G, A und B (1, 2, 3)
  • und einer Ablage- oder Aufhaspelstation (29) oder Ablängstation (28) besteht und der Abstand zwischen den Induktoren (7, 8, 9) und dem Walzenpaar (23) bzw. den Lasereinwirkzonen (12, 12', 12") und dem Walzenpaar (23) eingestellt werden kann.

24. Vorrichtung nach Anspruch 23, **dadurch gekennzeichnet, dass** Temperaturmesseinrichtungen (41, 42, 43) vorgesehen sind, die die Temperatur der Innenseiten der Bänder A (2) bzw. B (3) und des Bandes G (1) an einer Position unmittelbar vor den Lasereinwirkzonen (12, 12', 12") bzw. in den Lasereinwirkzonen (12, 12', 12") selbst messen und deren Messwert als Regelsignal für die Induktionsgeneratoren (30, 31, 32) bzw. Laserstrahlquellen (33, 34) dient.

25. Vorrichtung nach mindestens einem der Ansprüche 23 oder 24, **dadurch gekennzeichnet, dass** das Warmwalzenpaar (23) aus profilierten Walzen besteht, die nur in der Umgebung der Teilzonen (37') der Plattierflächen in umformendem Kontakt zu dem Band des Grundwerkstoffes G (1) und dem Band des Auflagewerkstoffes A (2) bzw. B (3) stehen.

**Claims**

1. Method for manufacturing metallic composite materials and semi-finished composites by hot-roll cladding of a strip of the basic material and a strip of the applied material, or the strips of the applied materials, by means of laser assistance and inductive assistance, **characterized in that**

  a) non-homogenous heating over a short time of at least one of the strips (1, 2) or (3) takes place as a result of a simultaneous input of energy by way of electromagnetic induction and laser radiation, wherein the inductive proportion of the total energy input is at least 65%;
  b) the inductive heating is performed in the strip-conveying direction (44) prior to laser radiation;
  c) the laser radiation is focused directly on or immediately ahead of the forming zone (35) of the internal strip sides (38, 39) or (40), so as to be immediately prior to the engagement of the rollers, and comprises the entire width of the forming zone (35) at a constant intensity, and at least the entire height of the forming zone (35) ;
  d) the laser-induced temperature fields $T_L$ are superimposed by the inductively generated temperature fields

$T_i$ in such a manner that at the location of the forming zone (35) a temperature gradient which is perpendicular to the rolling plane prevails, and the maximum temperature in the cladding plane (37) lies below the melting temperature $T_S$ of that strip (1, 2) or (3) that has the lowest melting temperature $T_S$;

e) hot-rolling of the strips (1, 2) and/or (3) which are provided with a temperature gradient is performed in one pass;

f) and a hot-rolling rate is set between 1 and 70%.

2. Method according to Claim 1, **characterized in that** the scale of the relative deformation between the strips (1) and (2), or (2) and (3), respectively, that is required for hot-roll cladding, and the total deformation of the strips (1, 2, 3) is set by the level and by the ratio of the inductively generated temperatures $T_i$, the height and extent of the laser-induced temperature field $T_L$, the geometry of the strips, the roller geometry, and by the mutual positioning of the rollers.

3. Method according to Claim 2, **characterized in that** the hot-roll cladding is performed by rollers of which at least one is profiled, and that the hot-rolling and the final shaping of the semi-finished product are performed simultaneously.

4. Method according to Claim 2, **characterized in that** only an intermediate shape of the cladded strip is produced by the hot-roll cladding, and that the rolling of the semi-finished product is performed in downstream profiled rollers (26).

5. Method according to at least one of the preceding claims, **characterized in that** for strips (1, 2) or (3) from thermally non-sensitive materials a penetrating inductive heating of the strips (1, 2) or (3) is performed, and that the inductor or inductors (7, 8, 9) completely encompass the respective strips (1, 2) or (3), and that the spacing between the forming zone (35) and the inductors (7, 8, 9) is chosen to be of such size that the temperature gradient of the inductive heating into the strip material has largely dissipated.

6. Method according to Claim 5, **characterized in that** the following applies to the levels of the inductive and Laser-generated temperature increases $\Delta T_i$ and $\Delta T_L$, respectively, on the internal strip sides (38, 39, 40) in the forming zone (35)

$$0.30 \ * \ T_S \ \le \ \Delta T_i \ \le \ 0.8 * T_S \qquad\qquad (I)$$

$$0.05 \ * \ T_S \ \le \ \Delta T_L \ \le \ 0.65 * T_S \qquad\qquad (II)$$

$$\Delta T_{ges} \ = \ \Delta T_i \ + \ \Delta T_L \ \le 0.98 \ * \ T_S \qquad\qquad (III)$$

$T_S$ being the melting temperature of the strip (1, 2) or (3) having the lowest melting temperature.

7. Method according to at least one of the preceding claims, **characterized in that** for strips (1, 2) or (3) from thermally sensitive materials only inductive heating of the internal strip sides (38, 39, or 40, respectively) is performed by means of a flat inductor, and that the inductors (7, 8, 9) are disposed immediately ahead of the laser-impact zone (12), wherein the hot-roll cladded strip (5) advantageously is rapidly cooled down in a cooling section (25) immediately upon leaving the roller pair (23).

8. Method according to at least one of the preceding claims, **characterized in that** a strip of a basic material G (1), a strip having the applied material A (2), and a strip having the applied material B (3) are used such that a semi-finished product which is cladded on both sides is created.

9. Method according to at least one of the preceding claims, **characterized in that** a strip of a basic material G (1) and only one strip having the applied material A (2) are used such that a semi-finished product which is cladded on one side is created.

10. Method according to Claim 9, **characterized in that** the basic material G (1) is a structural steel and the applied material A (2) is a heat-treatable steel.

11. Method according to at least one of the preceding claims, **characterized in that** the heating by induction and the laser impact, the transportation of the heated strip, and the roll cladding, and optionally the roller-profiling, take place under inert gas or, in the case of oxidizing strips, under a reduced atmosphere.

12. Method according to Claims 1, 6, 9, and 10, **characterized in that** the level of the inductively generated temperature $\Delta T_i$ is in the range of

$$500°C \leq \Delta T_i \leq 900°C \qquad\qquad\qquad (IV)$$

$$(\text{corresponds to } 0.35 * T_S \leq \Delta T_i \leq 0.63 * T_S) \quad (V)$$

and the level of the temperature $\Delta T_L$ which is generated by means of a laser is in the range of

$$300 \ K \leq \Delta T_L \leq 900 \ K \qquad\qquad\qquad (VI)$$

$$(\text{corresponds to } 0.21 * T_S \leq \Delta T_L \leq 0.63 * T_S) \quad (VII)$$

wherein additionally

$$0.84 * T_S \leq \Delta T_i + \Delta T_L \leq 0.98 * T_S \qquad\qquad (VIII).$$

13. Method according to Claims 1, 6, 9, 10, and 12, **characterized in that** the cooling rate of the roll cladded strip (5) by passing a cooling section (25) is set such that a normalized microstructure is created in the region of the applied material A (2).

14. Method according to Claims 1, 5, 9, 10, and 12, **characterized in that** the cross section and the width of the strip of the basic material G (1) are significantly larger than the cross section and the width of the strip of the applied material A (2), and that the hot-roll cladded strip P (5), while utilizing the temperature which has been generated in an inductive manner and by laser impact, by means of the profiled rollers (26) is formed to a semi-finished product H (6) in such a manner that the temperable applied material A (2) is completely embedded in the geometry of the semi-finished product.

15. Method according to Claims 1, 6, 9, 10, 12, and 14, **characterized in that** the temperable applied material A (2) is composed of a ball-bearing material, and/or **in that** the surfaces of the region of the temperable applied material A (2) are profiled such that they may serve as a raceway for cylinders or balls of an integrated rolling roller bearing.

16. Method according to at least one of the preceding claims, **characterized in that** for pairings of materials of a basic material G (1) and the strips of the applied materials A (2) or B (3), respectively, in which pairings there is an extremely strong tendency towards the formation of brittle intermetallic excretions, a thin strip of an intermediate-layer material C (4) is introduced between the strip of the basic material G (1) and the strip of the applied material A (2), or the strip of the basic material G (1) and the strip of the applied material B (3), respectively, which intermediate-layer material C (4) is chosen such that the latter forms detrimental intermetallic phases neither with the basic material G (1) nor with the applied materials A (2) or B (3), respectively, and has a higher melting temperature than the strip materials G (1), A (2), or B (3), respectively, is heated indirectly by way of the contact with the strip of the basic material G (1) or of the reflected proportion of the laser beam (10, 10', 10"), and is hot-roll cladded by the roller pair (23).

17. Method according to at least one of the preceding claims, **characterized in that** an elongate component which is already completely machined or is almost completely machined is used as the basic material G (1), an applied material A (2) being cladded onto the wear-exposed part-regions of the surface of said component.

18. Method according to at least one of the preceding claims, **characterized in that** a layered composite material is manufactured in such a manner that the joined and hot-roll cladded strip P5 in a new cycle both is used as a new basic material G (1) as well as an applied material A (2) or B (3) and is subjected to a new identical hot-roll cladding process, wherein the hot-rolling rate in the case of each cycle may advantageously be 50%.

19. Method according to at least one of the preceding claims, **characterized in that** the internal side of the strip from the basic material G (1) and/or from the applied material A (2) or B (3), respectively, in the initial state has longitudinally running grooves or ducts, and that the hot-rolling rate is set such that the grooves or ducts, respectively, are preserved during forming, having a reduced cross section.

20. Method according to at least one of the preceding claims, **characterized in that** a profiled sheet-metal or an extruded semi-finished product, having a cross-sectional shape which is relevant to the type of application, serves as the strip of the basic material G (1) and/or of the applied material A (2) or B (3), respectively.

21. Method according to one of the preceding claims, **characterized in that** the cladding area (30) is subdivided into a plurality of part-areas (37').

22. Method according to Claim 21, **characterized in that** the geometries of the strip of the applied material A (2) or B (3), respectively, and of the strip of the basic material G (1) are chosen such that said geometries following the hot-roll cladding of the separate part-zones (37') enclose a cavity which in relation to the cross section of the strips A (2), B (3), and G (1) is large.

23. Device for manufacturing metallic composite materials and semi-finished composites by hot-roll cladding by means of laser assistance, according to one or a plurality of methods as has/have been described in one or a plurality of Claims 1 to 22, **characterized in that** said device is composed of

- two or three, respectively, inductive heating stations which are composed of two or three, respectively, inductors (7, 8, 9) and two or three, respectively, associated induction generators (30, 31, 32);
- one or two lasers (33, 34) having one or two beam-forming units (11, 11', 11");
- one roller pair (23) for roll cladding, wherein at least one roller of the roller pair (23) represents a profiled roller, and/or that for roll cladding a set of profiled rollers (26) is located downstream of the roller pair (23);
- two or three infeeding or unwinding stations (15, 16, 17) for the strips G, A, and B (1, 2, 3); and
- one depositing or winding station (29) or cross-cutting station (28);

and that the spacing between the inductors (7, 8, 9) and the roller pair (23), or between the laser-impact zones (12, 12', 12") and the roller pair (23) may be set.

24. Device according to Claim 23, **characterized in that** temperature-measuring installations (41, 42, 43) which measure the temperature of the internal sides of the strips A (2) or B (3), respectively, and of the strip G (1) at a position immediately upstream of the laser-impact zones (12, 12', 12") or in the laser-impact zones (12, 12', 12") per see are provided, the measured value of said temperature-measuring installations (41, 42, 43) serving as a regulating signal for the induction generators (30, 31, 32) the laser-beam sources (33, 34), respectively.

25. Device according to at least one of Claims 23 or 24, **characterized in that** the hot-roller pair (23) is composed of profiled rollers which in the environment of the part-zones (37') of the cladding faces are in forming contact with the strip of the basic material G (1) and the strip of the applied material A (2) or B (3), respectively.

**Revendications**

1. Procédé de fabrication de matériaux composites métalliques et de semi-produits composites, par placage par laminage à chaud d'une bande constituée du matériau de base, avec une bande du matériau de dépôt, ou avec les bandes du matériau de dépôt, par assistance laser et assistance inductive, **caractérisé en ce que**

a. on procède à un chauffage non-homogène de courte durée d'au moins l'une des bandes (1, 2) ou (3), en conséquence d'un apport simultané d'énergie par induction électromagnétique et irradiation par laser, la partie inductive de l'apport total d'énergie étant d'au moins 65 %,
b. le chauffage inductif a lieu, dans la direction (44) de déroulement de la bande, avant l'irradiation par laser,
c. l'irradiation par laser est dirigée directement sur la zone de déformation (35) des faces intérieures (38, 39) ou (40) de la bande, ou immédiatement avant cette zone, directement avant la prise des cylindres, et comprend la totalité de la largeur de la zone de déformation (35) avec une intensité constante, et au moins la hauteur totale de la zone de déformation (35),

d. les champs de température $T_L$ induits par laser sont superposés par les champs de température $T_I$ obtenus par induction, de telle sorte qu'il règne sur le site de la zone de déformation (35) un gradient de température perpendiculaire au plan des cylindres, et que la température maximale dans le plan de placage (37) soit inférieure à la température de fusion $T_S$ de la bande (1, 2) ou (3) ayant la température de fusion $T_S$ la plus basse,

e. on procède en une passe à un laminage à chaud des bandes (1, 2) et/ou (3) pourvues d'un gradient de température,

f. et on ajuste un degré de laminage à chaud compris entre 1 et 70 %.

2. Procédé selon la revendication 1, **caractérisé en ce que** l'importance de la déformation relative, nécessaire au placage par laminage à chaud, entre les bandes (1) et (2) ou (2) et (3), et la déformation totale des bandes (1, 2, 3), sont ajustées par la hauteur et le rapport entre les températures $T_I$ produites par induction, la hauteur et l'extension du champ de température $T_L$ induit par laser, la géométrie des bandes, la géométrie des cylindres et le revêtement des cylindres.

3. Procédé selon la revendication 2, **caractérisé en ce que** le placage par laminage à chaud est réalisé avec des cylindres dont au moins l'un est profilé et le laminage à chaud réalisant simultanément le façonnage final du semi-produit.

4. Procédé selon la revendication 2, **caractérisé en ce que** l'on produit, avec le placage par laminage à chaud, seulement une forme intermédiaire de la bande plaquée et le laminage du semi-produit étant réalisé dans les cylindres de profilage (26) suivants.

5. Procédé selon au moins l'une des revendications précédentes, **caractérisé en ce que**, pour les bandes (1, 2) ou (3) en des matériaux thermiquement insensibles, on procède à un chauffage inductif radical des bandes (1, 2) ou (3), et le ou les inducteurs (7, 8, 9) englobent complètement les bandes correspondantes (1, 2) ou (3), et la distance entre la zone de déformation (35) et les inducteurs (7, 8, 9) est choisie suffisamment grande pour que le gradient de température du chauffage inductif se dégrade presque complètement lors de la pénétration dans le matériau de la bande.

6. Procédé selon la revendication 5, **caractérisé en ce qu'**on a, pour la valeur des élévations de température respectivement $\Delta T_I$ et $\Delta T_L$, produites par induction et par laser, sur les faces intérieures (38, 39, 40) des bandes dans la zone de déformation (35) :

$$0,30*T_S \leq \Delta T_I \leq 0,8*T_S \qquad \text{(I)}$$

$$0,05*T_S \leq \Delta T_L \leq 0,65*T_S \qquad \text{(II)}$$

$$\Delta T_{ges} = \Delta T_I + \Delta T_L \leq 0,98*T_S \qquad \text{(III)}$$

$T_S$ étant la température de fusion de la bande (1, 2) ou (3) ayant la température de fusion la plus basse.

7. Procédé selon au moins l'une des revendications précédentes, **caractérisé en ce que**, pour les bandes (1, 2) ou (3) en des matériaux thermiquement sensibles, on ne procède qu'à un chauffage inductif des faces intérieures (respectivement 38, 39 et 40) des bandes à l'aide d'un inducteur plat, et les inducteurs (respectivement 7, 8 et 9) sont disposés immédiatement avant la zone d'action du laser (12), auquel cas avantageusement la bande (5) plaquée par laminage à chaud est rapidement refroidie dans une section de refroidissement (25), immédiatement après être sortie de la paire de cylindres (23).

8. Procédé selon au moins l'une des revendications précédentes, **caractérisé en ce qu'**on utilise une bande d'un matériau de base G(1), une bande avec le matériau de dépôt A (2) et une bande avec le matériau de dépôt B(3), de façon qu'il se forme un semi-produit plaqué sur les deux faces.

**9.** Procédé selon au moins l'une des revendications précédentes, **caractérisé en ce qu'**on utilise une bande d'un matériau de base G(1) et seulement une bande avec le matériau de dépôt A(2), de façon à former un semi-produit plaqué sur une face.

**10.** Procédé selon la revendication 9, **caractérisé en ce que** le matériau de base G(1) est un acier de construction, et le matériau de dépôt A(2) est un acier de traitement.

**11.** Procédé selon au moins l'une des revendications précédentes, **caractérisé en ce que** le chauffage par induction et sous l'action d'un laser, le transport de la bande chauffée et le placage par laminage et éventuellement le profilage par laminage, s'effectuent sous un gaz protecteur, ou encore, dans le cas des bandes oxydantes, ont lieu sous une atmosphère réductrice.

**12.** Procédé selon les revendications 1, 6, 9 et 10, **caractérisé en ce que** la valeur de la température $\Delta T_I$ produite par induction est comprise dans la plage

$$500°C \leq \Delta T_I \leq 900°C \qquad (IV)$$

$$(\text{ce qui correspond à } 0,35*T_S \leq \Delta T_I \leq 0,63*T_S) \quad (V)$$

et la valeur de la température $\Delta T_L$ produite par laser est comprise dans la plage

$$300K \leq \Delta T_L \leq 900K \qquad (VI)$$

$$(\text{ce qui correspond à } 0,21*T_S \leq \Delta T_L \leq 0,63*T_S) \quad (VII)$$

et que l'on a en plus

$$0,84*T_S \leq \Delta T_I + \Delta T_L \leq 0,98*T_S \qquad (VIII)$$

**13.** Procédé selon les revendications 1, 6, 9, 10 et 12, **caractérisé en ce que** la vitesse de refroidissement de la bande (5) plaquée par laminage est ajustée, par traversée d'une section de refroidissement (25), de façon qu'il se crée une structure normalisée dans la zone du matériau de dépôt A(2).

**14.** Procédé selon les revendications 1, 5, 9, 10 et 12, **caractérisé en ce que** la section transversale et la largeur de la bande du matériau de base G(1) sont nettement supérieures à la section transversale et à la largeur de la bande du matériau de dépôt A(2), et la bande P(5) plaquée par laminage à chaud est, par utilisation de la température produite par induction et sous l'action d'un laser, à l'aide des cylindres de profilage (26), transformée en un semi-produit H(6) de telle sorte que le matériau de dépôt durcissable A(2) soit complètement incorporé dans la géométrie du semi-produit.

**15.** Procédé selon les revendications 1, 6, 9, 10, 12 et 14, **caractérisé en ce que** le matériau de dépôt durcissable A(2) est constitué d'un matériau pour roulements à billes, et/ou **en ce que** les surfaces de la zone du matériau de dépôt durcissable A(2) sont profilées de façon qu'elles puissent servir de voie de roulement pour des cylindres ou des billes d'un roulement intégré.

**16.** Procédé selon au moins l'une des revendications précédentes, **caractérisé en ce que**, pour les paires de matériaux entre le matériau de base G(1) et les bandes des matériaux de dépôt A(2) ou B(3), dans le cas desquelles il existe une tendance extrêmement forte à la formation de dépôts intermétalliques fragiles, entre la bande du matériau de base G(1) et la bande du matériau de dépôt A(2) ou la bande du matériau de base G(1) et la bande du matériau de dépôt B(3), on insère une bande mince en un matériau de couche intermédiaire C(4), qui est choisi de façon à ne former de phases intermétalliques nocives ni avec le matériau de base G(1), ni avec les matériaux de dépôt respectivement A(2) et B(3), et à présenter une température de fusion plus élevée que celle des matériaux de bande respectivement G(1), A(2) et B(3), à être chauffé indirectement par contact avec la bande du matériau de base G(1) ou la partie réfléchie du faisceau laser (10, 10', 10"), et à être lui aussi plaqué par laminage par la paire de cylindres (23).

**17.** Procédé selon au moins l'une des revendications précédentes, **caractérisé en ce qu'**on utilise en tant que matériau de base G(1) un composant allongé, ayant déjà subi un usinage complet ou presque complet, sur les zones partielles soumises à usure de la surface duquel est appliqué par placage un matériau de dépôt A(2).

**18.** Procédé selon au moins l'une des revendications précédentes, **caractérisé en ce qu'**on fabrique un matériau composite stratifié par le fait que l'on utilise la bande P5, plaquée par laminage à chaud et déjà réalisée, dans le cadre d'un nouveau passage, tant en tant que nouveau matériau de base G(1) qu'en tant que matériau de dépôt A(2) ou B(3), et qu'on la soumet à une nouvelle opération, équivalente, de placage par laminage à chaud, le degré de laminage à chaud pouvant à chaque passage être avantageusement de 50 %.

**19.** Procédé selon au moins l'une des revendications précédentes, **caractérisé en ce que** la face intérieure de la bande en le matériau de base G(1) et/ou du matériau de dépôt respectivement A(2) et B(3) présente, dans son état initial, des cannelures ou des canaux longitudinaux, et le degré de laminage à chaud est ajusté de façon que les cannelures ou les canaux se maintiennent avec une section transversale réduite pendant la transformation.

**20.** Procédé selon au moins l'une des revendications précédentes, **caractérisé en ce que**, en tant que bande du matériau de base G(1) et/ou du matériau de dépôt respectivement A(2) et B(3), on utilise une tôle profilée ou un semi-produit extrudé, ayant une forme en section transversale rapportée à l'application prévue.

**21.** Procédé selon l'une des revendications précédentes, **caractérisé en ce que** la surface de placage (30) est subdivisée en plusieurs surfaces partielles (37').

**22.** Procédé selon la revendication 21, **caractérisé en ce que** la géométrie de la bande du matériau de dépôt respectivement A(2) et B(3), et de la bande du matériau de base G(1), est choisie de façon, après le placage par laminage à chaud des zones partielles séparées (37'), à englober un espace creux, qui est grand par rapport à la section transversale des bandes A(2), B(3) et G(1).

**23.** Dispositif pour la fabrication de matériaux composites métalliques et de semi-produits composites par placage par laminage à chaud, avec assistance par laser selon un ou plusieurs procédés tels que décrits dans une ou plusieurs des revendications 1 à 22, **caractérisé en ce qu'**il est constitué

- de deux ou trois stations de chauffage inductif, constituées respectivement de deux ou trois inducteurs (7, 8, 9), et respectivement de deux ou trois générateurs d'induction (30, 31, 32) correspondants ;
- d'un ou deux lasers (33, 34), avec une ou deux unités de façonnage par irradiation (11, 11', 11") ;
- d'une paire de cylindres (23) pour placage par laminage, au moins un cylindre de la paire de cylindres (23) représentant un cylindre profilé, et/ou qu'un jeu de cylindres de profilage (26) est disposé en aval de la paire de cylindres (23) pour un placage par laminage ;
- de deux ou trois stations d'amenée ou de déroulement (15, 16, 17) pour les bandes G, A et B (1, 2, 3) ;
- et une station de réception ou d'enroulement (29) ou une station (28) de découpe à la longueur, et que la distance entre les inducteurs (7, 8, 9) et la paire de cylindres (23) ou les zones d'action par laser (12, 12', 12") et la paire de cylindres (23) peut être ajustée.

**24.** Dispositif selon la revendication 23, **caractérisé en ce que** sont prévus des dispositifs (41, 42, 43) de mesure de la température, qui mesurent la température des faces intérieures des bandes respectivement A(2) et B(3) et de la bande G(1) sur une position immédiatement en avant des zones d'action par laser (12, 12', 12") ou dans les zones d'action par laser (12, 12', 12") elles-mêmes, et dont la valeur mesurée sert de signal de réglage pour les générateurs d'induction (30, 31, 32) ou les sources de rayonnement laser (33, 34).

**25.** Dispositif selon au moins l'une des revendications 23 ou 24, **caractérisé en ce que** la paire (23) de cylindres de laminage à chaud est constituée de cylindres profilés, qui ne sont en contact pour déformation avec la bande du matériau de base G(1) et la bande du matériau de dépôt respectivement A(2) et B(3) que dans l'environnement des zones partielles (37') des surfaces de placage.

Fig.1:

EP 2 090 395 B1

P1

$T$

G

P2

A

$T$

$T_G^1$

1

2

$T_A^2$

$T_i$

$T_i$

P4

$T$

G

A

$T$

P5

$T_S^G$

$T_S^A$

$T_{GL}^4$

$T_{AL}^5$

$\Delta T_{ges}$ $\left\{ \begin{array}{c} \Delta T_L \\ \\ \Delta T_i \end{array} \right.$

$T_L$

$T_G^1$

$T_A^2$

$T_G^4$

$T_A^5$

$T_i$

P7

$T$

P7

37

$T_S^G$

$T_S^A$

5

$T_G^4$

$T_P^7$

$T_A^5$

$T_G^7; T_A^7$

$T_{GR}^7; T_{AR}^7$

Fig.2:

Fig.3a

Fig.3b

Fig. 3c

Fig. 5

Fig.4

Fig.6:

Fig.7:

a

b

c

d

e

f

g

h

i

j

k

l

m

Fig.8:

Fig.9:

a.

b.

c.

Fig.10:

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3713975
- DE 19502140
- DE 4429913
- WO 02100588 A

**In der Beschreibung aufgeführte Nicht-Patentliteratur**

- **JAHRGANG.** Aluminium. *Heft,* vol. 56 (2), 147-149
- walzen von Flachprodukten. Wiley-VCH, 2001, 15